(19) Europäisches Patentamt
European Patent Office
Office européen des brevets

(11) **EP 3 880 350 B1**

(12) **EUROPEAN PATENT SPECIFICATION**

(45) Date of publication and mention
of the grant of the patent:
**30.10.2024 Bulletin 2024/44**

(21) Application number: **19732062.5**

(22) Date of filing: **25.06.2019**

(51) International Patent Classification (IPC):
**C09K 23/00** (2022.01)

(52) Cooperative Patent Classification (CPC):
**C09K 23/007; C09K 23/00; C09K 23/16;
C09K 23/42**

(86) International application number:
**PCT/EP2019/066832**

(87) International publication number:
**WO 2020/098981 (22.05.2020 Gazette 2020/21)**

(54) **SURFACTANT-STABILIZED FLUID INTERFACE AND DISPERSION COMPRISING ONE OR MORE DROPLETS HAVING A SURFACTANT STABILIZED FLUID INTERFACE**

TENSID-STABILISIERTE FLÜSSIGKEITSGRENZFLÄCHE UND DISPERSION MIT EINEM ODER MEHREREN TRÖPFCHEN MIT EINER TENSIDSTABILISIERTEN FLÜSSIGKEITSGRENZFLÄCHE

INTERFACE FLUIDE STABILISÉE PAR UN TENSIOACTIF ET DISPERSION COMPRENANT UNE OU PLUSIEURS GOUTTELETTES AYANT UNE INTERFACE FLUIDE STABILISÉE PAR UN TENSIOACTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2018 EP 18206772**

(43) Date of publication of application:
**22.09.2021 Bulletin 2021/38**

(73) Proprietor: **Max-Planck-Gesellschaft zur Förderung der Wissenschaften e.V.
80539 München (DE)**

(72) Inventors:
• **GÖPFRICH, Kerstin**
**70563 Stuttgart (DE)**
• **PLATZMAN, Ilia**
**70195 Stuttgart (DE)**
• **SPATZ, Joachim P.**
**70569 Stuttgart (DE)**

(74) Representative: **Manitz Finsterwald
Patent- und Rechtsanwaltspartnerschaft mbB
Martin-Greif-Strasse 1
80336 München (DE)**

(56) References cited:
**US-A1- 2011 158 906     US-A1- 2013 064 759
US-A1- 2015 217 246**

• **DING KE ET AL: "Engineering the structural properties of DNA block copolymer micelles by molecular recognition", ANGEWANDTE CHEMIE, INTERNATIONAL EDITION, WILEY-VCH, DE, vol. 46, 9 January 2007 (2007-01-09), pages 1172 - 1175, XP002468093, ISSN: 1433-7851, DOI: 10.1002/ANIE.200603064**
• **WAGNER O ET AL: "Biocompatible fluorinated polyglycerols for droplet microfluidics as an alternative to PEG-based copolymer surfactants", LAB ON A CHIP,, vol. 16, no. 1, 1 January 2016 (2016-01-01), pages 65 - 69, XP002775855, DOI: 10.1039/C5LC00823A**
• **ILIA PLATZMAN ET AL: "Synthesis of Nanostructured and Biofunctionalized Water-in-Oil Droplets as Tools for Homing T Cells", JOURNAL OF THE AMERICAN CHEMICAL SOCIETY, vol. 135, no. 9, 6 March 2013 (2013-03-06), US, pages 3339 - 3342, XP055286566, ISSN: 0002-7863, DOI: 10.1021/ja311588c**

Remarks:
The complete document including Reference Table(s) and the Sequence Listing(s) can be downloaded from the EPO website

Remarks:
The complete document including Reference Table(s) and the Sequence Listing(s) can be downloaded from the EPO website

**Description**

The present invention relates to a surfactant-stabilized fluid interface, to a dispersion comprising one or more droplets having a surfactant stabilized fluid interface and to a separation process using a surfactant-stabilized fluid interface. Also disclosed is using the interface or the dispersion comprising the same in chemical reactions.

Physical compartments in the form of emulsion droplets provide an easy to control and self-contained microenvironment. Therefore, droplet-based microfluidics has emerged as a powerful tool to produce such compartments for single cell and deoxyribonucleic acid (DNA) analysis, chemical synthesis, drug delivery as well as synthetic cell assembly. Many of these applications depend on strategies to functionalize the droplets' inner periphery in order to adjust interactions with the droplet content. This has been achieved by covalent modification of the surfactant molecules themselves, for instance with gold nanoparticles, amine groups or carboxyl groups. However, this method is not universally applicable - it depends on the success of the chemical synthesis and can interfere with the stability and the physical properties of the droplets. Moreover, the covalent binding of the functional group to the droplet periphery is irreversible.

DNA nanotechnology on the other hand can attain the programmable assembly of arbitrary nanoscale architectures like DNA-based lattices, nanopores or lid-containing boxes. DNA has also been used as a scaffold or linker to assemble secondary components including proteins, gold nanoparticles and liposomes. In addition, networks of emulsion droplets or colloid-coated droplets have been created using DNA linkers. Yet in all cases, the linkage was based on biotinylated DNA, which requires additional efforts to graft streptavidin onto the droplet surface so that the biotinylated DNA can be linked via the biotin-streptavidin interaction to the droplet surface. Furthermore, it has never been demonstrated that it is possible to functionalize the interior of water-in-oil emulsion droplets with DNA. Moreover, it was observed that synthetic mimics of cellular compartments based on lipid-based protocells lack the mechanical and chemical stability to allow their use under various conditions required for performing for example chemical reactions.

Ilia Platzman et al. describe in Synthesis of Nanostructured and Biofunctionalized Water-in-Oil Droplets as Tools for Homing T Cells, J. Am. Chem. Soc. 2013, 135, 3339-3342 a surfactant-stabilized droplet, wherein the surfactant is a block copolymer. It was shown that gold nanoparticles, on the surface of which a PFPE-PEG surfactant is grafted, are contained inside the droplet.

Accordingly, there is a need for a fluid interface which can be functionalized more easily and which can be used under versatile conditions.

In accordance with the present invention, this object is solved by a surfactant-stabilized fluid interface according to claim 1.

The surfactant-stabilized fluid interface according to the invention comprises a layer of surfactant and a first compound containing a hydrophobic part covalently linked to a molecular recognition site, wherein the surfactant-stabilized fluid interface has a first fluid on one side and a second fluid on the other side, wherein the surfactant stabilizes the fluid interface, wherein the hydrophobic part of the first compound is interacting with the layer of surfactant by secondary non-covalent interactions and the molecular recognition site of the first compound extends from the layer of surfactant, and wherein the surfactant is a block-copolymer having at least one hydrophilic block and at least one hydrophobic block. The first or second fluid contains a second compound comprising a further molecular recognition site which is capable of selectively binding to the molecular recognition site of the first compound, and the molecular recognition site of the first compound is designed to form hydrogen bonds with the molecular recognition site of the second compound.

This solution bases on the surprising finding that by using a block-copolymer having at least one hydrophilic block and at least one hydrophobic block as surfactant, a stable surfactant-stabilized fluid interface can be formed in which a first compound having a hydrophobic part and a molecular recognition site self assembles into the layer of surfactant so that the hydrophobic part is anchored in the layer of surfactant and the molecular recognition site extends from the surfactant. This way, the properties of the molecular recognition site can be used in versatile ways, for example for controlling the microfluidic behavior of a microfluidic droplet encapsulated by such a layer of surfactant or for catalyzing chemical reactions at the fluid interface. Since the first part is provided with a molecular recognition site it is possible to reversibly bind another molecular recognition site of a second compound. By reversibly binding another compound to the molecular recognition site of the first compound, it is possible to utilize that further compound inside or outside of a droplet encapsulated by such a fluid interface, i.e. on the side to which the hydrophilic part extends from the layer of surfactant. As a result it is possible to introduce various functional moieties to the surfactant-stabilized fluid interface so that the properties of the surfactant-stabilized fluid interface or of a droplet encapsulated by such a surfactant-stabilized fluid interface can be tailored to specific applications.

The present invention further concerns a dispersion comprising one or more droplets having a surfactant stabilized fluid interface as described in the claims and below. In the dispersion, the second fluid is the continuous phase and the first fluid is the dispersed phase, i.e. is contained in the droplets.

Moreover, the present invention also allows to use the surfactant-stabilized fluid interface of an emulsion droplet as described herein to control the interactions between the droplet interface and its content, to control chemical reactions, for single-cell analysis and droplet-based sequencing. The invention is further applicable to planar surfactant-stabilized fluid interfaces in general for surface-enhanced catalysis, medical testing, filtering or component separation.

In addition, the present invention concerns a separating process as described below and in the claims.

Preferred embodiments of the present invention are the subject-matter of dependent claims and explained in the following. It is to be understood that wherever there is no logical contradiction preferred features described below or in the dependent claims can be combined with each other.

It is preferred that the surfactant stabilized fluid interface encapsulates an emulsion droplet having a center comprising the first fluid. Even more preferably, the emulsion droplet is a microfluidic droplet.

It is particularly preferred that in the surfactant-stabilized fluid interface according to the invention the first compound has a molecular recognition site which is hydrophilic. With the molecular recognition site being hydrophilic it is easier that it extends away from the layer of surfactant. While the hydrophobic part of the first compound can be covalently bonded directly to the molecular recognition site, it is also possible that a linker is provided between the hydrophobic part and the molecular recognition site. The person skilled in the art understands that it's possible to provide the first compound with further structural elements which are not part of the hydrophobic part or of the molecular recognition site. However, in the present invention is also preferred to use first compounds consisting of a hydrophobic part, a molecular recognition site and optionally a linker between the hydrophobic part and the molecular recognition site.

The diameter of the droplet is not particularly limited. It is possible to produce droplets having a diameter of 0.1 $\mu$m or more or of 0.5 $\mu$m or more. However, with the standard methods of droplet generation by microfluidic or shaking it can be difficult to produce droplets having a diameter of less than 1 $\mu$m, it is preferred that the diameter of the droplets is 1 $\mu$m or greater, more preferred 5 $\mu$m or greater. Droplets with a diameter of 1 $\mu$m or greater can be produced for example by shaking an aqueous phase including the first compound and a non-aqueous phase including the surfactant. It is further possible to produce droplets with a diameter of 1 $\mu$m or greater by the method described below. The present invention is not limited in regard to the upper limit of upper diameter of the microdroplet. However, for more easily manufacturing the microdroplets it is preferred that the diameter of the microdroplets is not more than 500 $\mu$m. Micro-droplets having a diameter of not more than 500 $\mu$m can be manufactured by using microfluidic techniques. Particularly preferred sizes for droplets having a surfactant-stabilized fluid interface are in the range of 0.5 $\mu$m to 1,000 $\mu$m, in the range of 0.5 to 1,000 $\mu$m, in the range of 10 to 1200 $\mu$m or in the range of of 20 to 60 $\mu$m.

It is further preferred, that in the droplet encapsulated by a surfactant-stabilized fluid interface according to the invention the hydrophobic part of the first compound has a structural element based on one of fluorinated polyether, cholesterol, tocopherol, ibuprofen, palmitate, stearate, trolox or porphyrine, hydrophobic aminoacids or proteins, derivatives of any of these compounds, or other hydrophobic moieties which can be coupled to a molecular recognition site. Such hydrophobic parts are capable of inserting into artificial membranes formed by block copolymer surfactants and thereby anchoring the first compound to the surfactant layer.

Good results are particularly obtained, because the surfactant is a block copolymer comprising a hydrophobic block and a hydrophilic block. The hydrophobic block may be, but is not restricted to members, e.g. selected from the group consisting of perfluorinated polymers, such as perfluorinated polyethers, polystyrene or poly(olefin oxides), such as polypropylene oxide), whereas the hydrophilic block may be selected e.g. from polyether glycols, polyetheramine, polyacrylate acid, polymethylacrylate acid or poly[poly(ethylene glycol) methyl ether methacrylate].

Likewise, good results are obtained, if the polymer shell of the droplet is made of a triblock copolymer comprising two hydrophobic perfluorinated polymer end blocks and therebetween a hydrophilic polyether glycol block, wherein the triblock copolymer is folded so that the hydrophobic perfluorinated polymer blocks are arranged at the outer side and that the hydrophilic polyether glycol block is arranged at the inner side of the polymer shell. Examples for the lipophilic or hydrophobic blocks and the hydrophilic blocks are the same as those mentioned above.

Preferably, the perfluorinated polymer block is a perfluorinated polyether block (PFPE) and more preferably a perfluorinated polyether block having a weight average molecular weight of 1,000 to 10,000 g/mol. Likewise preferably, the polyether glycol (PEG) and polyetheramine (JEFFAMINE) blocks have preferably a weight average molecular weight of 100 to 10,000 g/mol. More specifically, suitable examples for the respective copolymers are PFPE-carboxylic acid (Krytox, MW 2500 or 7000 g/mol) and suitable examples for the respective diblock copolymers are PFPE(7000 g/mol)-PEG(1400 g/mol), PFPE(7000 g/mol)- PEG(600 g/mol), PFPE(2500 g/mol)- PEG(600 g/mol), PFPE(4000 g/mol)-PEG(600 g/mol), PFPE(4000 g/mol)- PEG(1400 g/mol), PFPE(2000 g/mol)- PEG(600 g/mol), PFPE(7000 g/mol)- JEFFAMINE(600 g/mol), PFPE(7000 g/mol)- JEFFAMINE (900 g/mol), PFPE(2500 g/mol)- JEFFAMINE(600 g/mol), PFPE(2500 g/mol)-JEFFAMINE(900 g/mol), PFPE(4000 g/mol)- JEFFAMINE(900 g/mol), PFPE(2500 g/mol)- JEFFAMINE(600 g/mol), PFPE(2000 g/mol)- JEFFAMINE (600 g/mol), PFPE(2000 g/mol)- JEFFAMINE (900 g/mol) and suitable examples for the respective triblock copolymers are PFPE(7000 g/mol)-PEG(1400 g/mol)-PFPE(7000 g/mol), PFPE(7000 g/mol)-PEG(600 g/mol)-PFPE(7000 g/mol), PFPE(4000 g/mol)- PEG(1400 g/mol)- PFPE(4000 g/mol) PFPE(2500 g/mol)- PEG(600 g/mol)-PFPE(2500 g/mol), PFPE(2000 g/mol)- PEG(600 g/mol)-PFPE(2000 g/mol), PFPE(7000 g/mol)- JEFFAMINE(900 g/mol)-PFPE(7000 g/mol) PFPE(7000 g/mol)- JEFFAMINE(600 g/mol)-PFPE(7000 g/mol), PFPE(4000 g/mol)- JEFFAMINE(900 g/mol)-PFPE(4000 g/mol), PFPE(4000 g/mol)- JEFFAMINE(600 g/mol)-PFPE(4000 g/mol), PFPE(2500 g/mol)- JEFFAMINE(900 g/mol)-PFPE(2500 g/mol), PFPE(2500 g/mol)- JEFFAMINE(600 g/mol)-PFPE(2500 g/mol), PFPE(2000 g/mol)- JEFFAMINE(900 g/mol)-PFPE(2000 g/mol) and PFPE(2000 g/mol)- JEFFAMINE(600 g/mol)-PFPE(2000 g/mol). The molecular weight is determined with gel permeation chromatography using a polystyrene standard.

It is further preferred that at least one of the hydrophobic blocks of the surfactant is fluorinated. A stable droplet can be obtained, when the surfactant is a block copolymer comprising one block having a polyethylene glycol segment and comprising another block which is fluorinated. According to a particularly preferred embodiment of the present invention, the block copolymer is a diblock copolymer or a triblock copolymer. Particularly preferred surfactants are of Perflouro-polyether-polyethylene glycol (PFPE-PEG) block-copolymer fluorosurfactants, for example PFPE-PEG diblock-copolymer surfactant or a PFPE-PEG-PFPE triblock-copolymer surfactant.

According to the present invention it is preferred that one of the first and second fluids is water-based one of the first and second fluid is oil-based, e.g. the first fluid is water-based and the second fluid is oil-based, or the first fluid is oil-based and the second fluid is water-based, or the first and second fluid are water-based, or the first and second fluid are oil-based. In this regard it is particularly preferred that the first fluid is water-based, especially when the molecular recognition site of the first compound is hydrophilic. With the first fluid being water-based and the molecular recognition site of the first compound being hydrophilic, it is possible to have the molecular recognition site of the first compound extending from the layer of surfactant into the center of the droplet. This way, it is possible to use the molecular recognition site of the first compound to control release and take up of the second compound inside the controlled environment of the center of the droplet.

The droplet according to the present invention contains a second compound comprising a further molecular recognition site which is capable of selectively binding to the molecular recognition site of the first compound. By providing such a second compound it is possible to introduce functional groups to that side of the surfactant-stabilized interface according to the invention, from which the molecular recognition site of the first compound extends away, for example to a center of a droplet encapsulated by the surfactant-stabilized interface, wherein the functional groups self-assemble to the layer of surfactant by molecular recognition. The introduced functional groups do not bind covalently to the layer of surfactant, i.e. the second compound interacts with the first compound via secondary interactions. Accordingly, the second compound self assembles with the molecular recognition site of the first compound which extends from the layer of surfactant. This self-assembly is preferably based on secondary interactions, i.e. not on covalent bonds, so that at low temperatures, for example room temperature, the first compound and the second compound hybridize and thereby form an aggregate, for example a dimer. When increasing the temperature above room temperature, for example to temperatures of greater than 50 °C, the aggregate of the first compound and of the second compound can melt and the second compound is released from the layer of surfactant. It is to be understood that the temperature at which the second compound is released from the first compound depends on the nature of the molecular recognition site and can be tuned according to need, by choosing the molecular recognition site appropriately. If the molecular recognition is for example based on formation of Watson-Crick base pairs between sequences of nucleobases, it is possible to tune the release temperature of the second compound by choosing the sequence and number of nucleobases appropriately. If for example the sequence length is increased, the release temperature can increase. However, it is also possible to increase the release temperature for example by changing the types of nucleobases in the nucleobase sequence without increasing the length of the nucleobase sequence (e.g. increasing the content of nucleobase G and/or C).

The second compound can be introduced into the droplet when manufacturing the droplet in the first place. In this case, the first and second compound can be dissolved in the same aqueous solution or alternatively can be dissolved in separate aqueous solutions which are then combined with a non-aqueous solution and the surfactant to form the droplets either by shaking or by microfluidic techniques. Alternatively, also a microfluidic particle can be manufactured containing only the first compound and separately from that a microfluidic particle can be manufactured which contains only the second compound. When combining a dispersion of the microfluidic particle containing the first compound and a dispersion of the microfluidic particle containing the second compound, there is a possibility that the microfluidic particles coalesce and form a microfluidic particle containing the first and the second compound.

It is further possible that the droplet contains in addition to the first and second compounds a third or more compounds which also has a molecular recognition site capable of forming an aggregate, e.g. a dimer, with either the first or the second compound.

Due to the versatility of available motives, the ease of chemical functionalization and the programmability and reversibility of the interaction, molecular recognition between the first and the second compound occurs via hydrogen bonds. In this regard the molecular recognition site of the first compound is designed to form hydrogen bonds with the molecular recognition site of the second compound.

Molecular recognition between nucleic acids is a versatile and well examined example for molecular recognition sites. In this regard, it is particularly preferred that the molecular recognition site of the first compound and of the second compound are based on nucleic acids. It is further preferred that the molecular recognition sites of the first compound and of the second compound are based on DNA, RNA, or XNA, e.g. PNA, CeNA, TNA, GNA, LNA or antisense oligonucleotides, e.g. FANA, ANA. For achieving a sufficient interaction at room temperature it is even more preferred that the molecular recognition sites of the first compound and of the second compound comprise 5 or more nucleobases, even more preferred 7 or more nucleobases and most preferred 10 or more nucleobases. In nucleic acids based on PNA dimerization of two complementary PNA strands is generally stronger than a comparable dimerization of two complementary DNA strands. The reason therefore is that the DNA backbone contains negatively charged phosphate groups which repel the two dimerized DNA strands. Such negatively charged phosphate groups are not present in PNA strands. Accordingly, in case the molecular recognition sites are based on DNA or RNA it is particularly preferred that the molecular recognition sites comprise 7 or more nuclear bases, even more preferably 10 or more nuclear bases. By using molecular recognition sites based on nucleic acids, the strength of the secondary interaction between the first compound and the second compound can be tailoridc by choosing the sequence and the number of the nucleobases in the nucleic acids. Exemplary molecular recognition sites are presented in the sequences according to SEQ ID No. 1 to 13.

It is particularly preferred that in the droplet according to the present invention the molecular recognition site of the first compound comprises a sequence of nucleobases and the molecular recognition site of the second compound comprises a sequence of nucleobases, wherein the sequence of the nucleobases of the molecular recognition site of the first compound is at least partially complementary to the sequence of the nucleobases of the molecular recognition site of the second compound. In this regard it is noted that the length of the sequence of nucleobases of the first compound is not necessarily identical to the length of the sequence of nuclear basis of the second compound as long as sufficient complementary interaction between the nucleobases of the first compound and the nucleobases of the second compound can occur. Nevertheless, the lengths of these sequences of nuclear basis can be identical. It is particularly preferred that in the droplet according to the present invention the molecular recognition site of the first compound is capable to form Watson-Crick base pairing with the molecular recognition site of the second compound.

For using the molecular recognition site of the first compound to introduce functional groups into the controlled environment of the center of the droplet, the molecular recognition site of the first compound extends from the layer of surfactant into the center of the droplet. This can be achieved for example, when the fluid is a water-based fluid and the molecular recognition site of the first compound contains polar groups, which are present for example in groups capable of performing hydrogen bonds.

It is particularly preferred that the molecular recognition site of the second compound is bound to a functional moiety having a functional group and/or is bound to a catalytically active domain and/or is bound to a polymer and/or is bound to a micro- or nanoparticle and/or is bound to a living cell. The type of functional group, catalytically active domain, polymer and living cell is not particularly limited. Due to the reversible interaction between the first molecular recognition site on the first compound and the second molecular recognition site on the second compound, it is possible to release and bind the functional moiety in a controlled manner by switching off the interaction between the first molecular recognition site on the first compound and the second molecular recognition site on the second compound. It is in principle possible to trigger the interaction of the first and second compound by a plurality of external stimuli. A preferred way to influence the direction of the first and second compound is by changing the temperature. With increasing temperature, interactions such as hydrogen bonds can break, so that the second compound is released from the layer of the surfactant. This can be used for example to release a catalyst from the layer of surfactant. When the temperature drops, the hydrogen bonds can form again, so that the second compound is bonded again to delay of surfactant. This way, the functional moiety can be recovered from the first or second fluid into which it has been previously released. Apart from using a change of temperature for controlling release and uptake of the second compound from or onto the layer of surfactant, it is also possible to use e.g. pH value, light, ionic conditions, buffer conditions or the presence of ligands.

It is particularly preferred that the second fluid comprises further droplets.

It is preferred that the dispersion comprises the droplets in an amount of $10^{15}$ or less droplets per ml, preferably $10^{12}$ or less droplets per ml, more preferably $10^{9}$ or less droplets per ml. The number of droplets can be determined for example by counting the droplets using an optical microscope. The amount of microfluidic droplets per volume can be adjusted by controlling the flow rates in the microfluidic device and determined by high speed imaging during microfluidic production or conventional microscopy using an observation chamber.

The present invention further concerns a separating process using a surfactant-stabilized fluid interface according to the invention for separating a component A from a first fluid, wherein the method comprises the following steps: providing the first fluid in which the component A and a first compound are dissolved or dispersed, wherein the first compound comprises a hydrophobic part and a molecular recognition site, wherein the hydrophobic part is covalently linked to the molecular recognition site, and wherein the molecular recognition site is capable of binding component A; providing the second fluid in which a surfactant is dissolved; and bringing the first and second fluid into contact with each other; wherein the second fluid is immiscible with the first fluid such that a phase separation between the first and second fluid occurs and an interface between the first and second fluid is formed when the first and second fluid contact each other, and wherein the interface between the first and second fluid is a surfactant-stabilized fluid interface as described above and in the claims.

The above separating process is applicable for the specific separation of a component A from a first fluid and from one more components B, i.e. component B can be one compound or a mixture of compounds. Due to the specific separation of a component A, the separation process can be used for example for fluid purification or component separation, as long as it is possible to couple a molecular recognition site for the component A which should be linked to a hydrophobic part. Component A is not particularly limited. It can vary in size and molecular weight and can be as small as single-atom ion, in this case the molecular recognition site could for example be a ligand having specificity of said single-atom ion (e.g. a G-quadruplex which binds potassium ions), or even as large as cells. The applications of the separating process include, but are not limited to water purification, e.g. removal of contaminants like heavy metals, filtration of body fluids, e.g. removal of pathogenic components, and cell sorting, e.g. to remove bacteria or to sort mixed cell populations according to their surface markers.

It is preferred that in the separating process according to the invention an additional step of mixing the first and second fluid is performed, to form or a dispersion as described above and in the claims. Such a dispersion contains a plurality of droplets and has a much larger surface of the surfactant-stabilized fluid interface. The mixing can be performed by stirring, shaking, e.g. vortexing, or microfluidic techniques, wherein stirring and shaking are preferred in view of simpleness.

According to a preferred aspect of the separating process, an additional step of releasing the first fluid and the component(s) B is performed. This can be achieved e.g. by adding a destabilizing surfactant to destabilize the surfactant-stabilized fluid interface formed between the first and second fluid, or with a microfluidic droplet fusion device or with an electrostatic gun. The destabilizing surfactant can be added any time after formation of the surfactant-stabilized fluid interface. However, it can be preferable to add the destabilizing surfactant after a certain time has passed so that the component A is separated from the first fluid and bound to the surfactant stabilized-fluid interface via the first compound. As destabilizing surfactant any surfactant can be used which destabilizes the surfactant-stabilized fluid interface. Fluorinated alcohols, e.g. perfluoro-1-octanol (PFO), are one example for suitable destabilizing surfactants for surfactant-stabilized fluid interfaces having a block-copolymer having at least one hydrophilic block and at least one hydrophobic block as surfactant. It is preferred that the destabilizing surfactant is shorter (lower molecular weight) than the emulsion-stabilizing surfactants, so that stabilizing surfactant is replaced.

It is therefore further preferred that in the separating process according to the present invention between mixing and adding of the destabilizing surfactant an incubation step is performed. The duration of the incubation step, i.e. the time between the formation of the surfactant-stabilized fluid interface and the addition of the destabilizing surfactant is not particularly limited. It is possible that the incubation time is 10 seconds or more, preferably 1 minute or more, even more preferably 5 minutes or more. Thereby sufficient time is provided for the hydrophobic part of the first compound to self-assemble into the surfactant stabilized fluid interface. In addition, the incubation step allows for sufficient time for compound A to bind to the molecular recognition site. Usually, such self-assembly processes are finalized in short periods of times. There is no upper time limit for the incubation step, it is from an economic point of view not feasible to perform it longer than 24 hours.

It is further preferred that in the separating process after formation of the surfactant-stabilized fluid interface one or more external stimuli for releasing component A from the molecular recognition site of the first compound is applied.

Now the invention will be described in more detail also by referring to Figures and Examples which, however, do not limit the present application.

Fig. 1       shows the interaction of cholesterol-tagged and cholesterol-free DNA with surfactant-stabilized droplets according to the invention. Scale bars: 10 $\mu$m.

Fig. 2       shows FRAP measurements of microfluidic water-in-oil droplets according to the invention functionalized with cholesterol-tagged Atto488-labeled single-stranded DNA. The three phases of the experiment (i-iii) are indicated.

Fig. 3       shows how microfluidic water-in-oil droplets according to the invention can be functionalized with various components via complementary DNA-tags. Scale bars in the lower row of images are: 30 $\mu$m in a and b, 20 $\mu$m in c and e, 5 $\mu$m in d.

Fig. 4       shows the temperature-responsive reversibility of droplet functionalization.

Fig. 5       shows a schematic illustration of the DNA lattice design, adapted from Kurokawa et al. [3]

Fig. 6       shows a schematic layout of microfluidic devices for the production of surfactant-stabilized droplets according to the invention.

Fig. 7       shows interaction of cholesterol-tagged (according to the invention) and cholesterol-free DNA with surfactant-stabilized droplets employing a fluorescence labeled aqueous phase. Scale bars: 10 $\mu$m.

Fig. 8    shows that in microdroplets according to the invention cholesterol-tagged DNA remains stable at the droplet interface. Scale bars: 50 $\mu$m.

Fig. 9    is a graph showing the diffusion coefficient of cholesterol-tagged Atto488-labelled DNA encapsulated in surfactant-stabilized droplets as a function of surfactant concentration (in weight percent).

Fig. 10   shows confocal fluorescence imaging of droplets according to the invention containing cholesterol-tagged DNA and a complementary DNA strand. Scale bar: 50 $\mu$m.

Fig. 11   shows that cholesterol-tagged DNA binds polystyrene microspheres. Scale bar: 30 $\mu$m.

Fig. 12   shows the functionalization of water-in-oil droplets according to the invention with beads (diameter: 2 $\mu$m) via DNA-tags. Scale bar: 30 $\mu$m in a,b,c; 10 $\mu$m in d.

Fig. 13   shows the functionalization of water-in-oil droplets according to the invention with carboxylate-modified beads (diameter: 0.3 $\mu$m) via DNA-tags. Scale bar: 30 $\mu$m.

Fig. 14   shows the formation of cortex-like actin structures inside droplets according to the invention via DNA-tags. Scale bars: 50 $\mu$m in a) and 5 $\mu$m in the other images.

Fig. 15   shows that cholesterol-tagged DNA attaches to Jurkat cells. Scale bars: 3 $\mu$m in a, b, d and e; 10 $\mu$m in c and f.

Fig. 16   shows that Jurkat cells are located at the bottom of surfactant-stabilized droplets in the absence of DNA linkers. Scale bar: 30 $\mu$m.

Fig. 17   shows that Jurkat cells can form droplet spanning multicellular clusters in the presence of the DNA linkers in droplets according to the invention. Scale bar: 20 $\mu$m.

Fig. 18   schematically shows a separating process according to the invention.

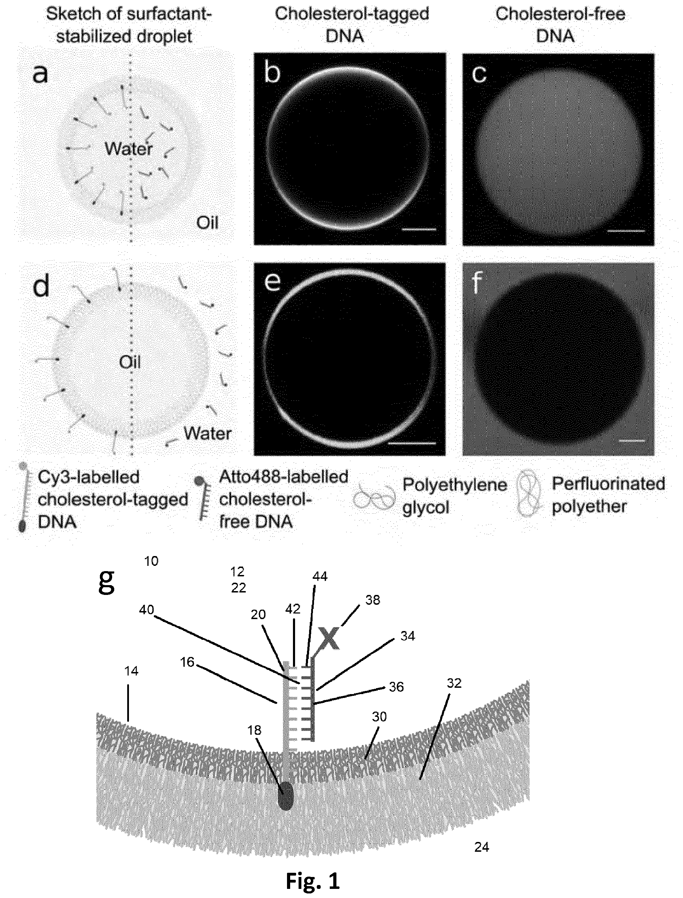

Fig. 1 shows the interaction of cholesterol-tagged and cholesterol-free DNA with surfactant-stabilized droplets according to the invention. Cholesterol-tagged DNA is an example for a first compound containing a hydrophobic part covalently linked to a molecular recognition site, wherein the cholesterol tag is the hydrophobic part and a DNA fragment is the molecular recognition site. In image a) of Fig. 1 a schematic illustration of a water-in-oil droplet is provided, wherein the part left of the red dotted line indicates a droplet with cholesterol-tagged DNA and the right side of the dotted line indicates a droplet with cholesterol-free DNA. Water is for example the first fluid and oil is for example the second fluid. Images b and c in Fig. 1 show confocal fluorescence images of a water-in-oil droplet with cholesterol-tagged Cy3-labeled DNA (with SEQ ID No. 1; $\lambda_{ex}$ = 550 nm) (according to the invention) (b) or with cholesterol-free Atto488-labeled DNA (with SEQ ID No. 2; $\lambda_{ex}$ = 488 nm) added to the internal aqueous phase (c) (not according to the invention). In image d) of Fig. 1 a schematic illustration of an oil-in-water droplet is provided, wherein the part left of the red dotted line indicates a droplet with cholesterol-tagged DNA and the right side of the dotted line indicates a droplet with cholesterol-free DNA. A confocal fluorescence image of an oil-in-water droplet with cholesterol-tagged Cy3-labeled DNA (with SEQ ID No. 1) added to the external aqueous phase is shown in image e of Fig. 1 and a corresponding image of a droplet with cholesterol-free Atto488-labeled DNA (with SEQ ID No. 2) added to the external aqueous phase is shown in image f of Fig. 1. The images a to f of Fig. 1 indicate that cholesterol-tagged DNA self-assembles at the droplet periphery, whereas cholesterol-free DNA remains homogeneously distributed in the aqueous phase images b, c, e and f were produced using 10 mM Tris-HCl, 1 mM EDTA, 5 mM MgCl$_2$, pH 8. Scale bars in these images are 10 $\mu$m.

In part g of Fig. 1 an enlarged view of a section of a microfluidic droplet 10 according to the invention is schematically shown. The microfluidic droplet 10 comprises a center 12 encapsulated by a layer of surfactant 14. The microfluidic droplet 10 further comprises a first compound 16 containing a hydrophobic part 18 covalently linked to a molecular recognition site 20. The center 12 of the microfluidic droplet 10 contains a first fluid 22, e.g. a polar liquid such as an aqueous solution or water. The microfluidic droplet 10 is surrounded by a second fluid 24 which is different from the first fluid 22, e.g. a hydrophobic liquid such as oil. The layer of surfactant 14 stabilizes the droplet 10 in the second fluid 24. The layer of surfactant is of a block-copolymer 28 having at least one hydrophilic block 30 and at least one hydrophobic block 32. Hydrophilic blocks 30 and hydrophobic blocks 32 phase separate from each other so that the hydrophilic blocks are located on the site of the layer of surfactant 14 which faces that of the first and second fluid 22, 24 which is more hydrophilic. In the situation schematically illustrated in part g of Fig. 1, the first fluid 22 is more hydrophilic than the second fluid 24 so that the molecular recognition site 20 of the first compound 16 extends away from the layer of surfactant 14 - in which the hydrophobic part 18 is anchored - into the center 12 of the microfluidic droplet 10.

As illustrated in part g of Fig. 1, the microfluidic droplet can contain a second compound 34. The second compound 34 comprises a further molecular recognition site 36 which is capable of selectively binding to the molecular recognition site 20 of the first compound 16. The second compound 34 illustrated in part g of Fig. 1 further comprises a functional moiety 38 which is linked to the molecular recognition site 36. At an interface 40 between the first compound 16 and the second compound 34 interactions occur which attract the first compound 16 and the second compound 34 to one another. The interaction at the interface 40 is not based on covalent bonds, so that the agglomerate of the first compound 16 and of the second compound 34 can disintegrate so that the second compound 34 is released from the layer of surfactant 14. The interaction at the interface 40 can be based for example on hydrogen bonds between nucleobases 42, 44 provided at the molecular recognition sites 20, 36 of the first and second compounds 16, 34.

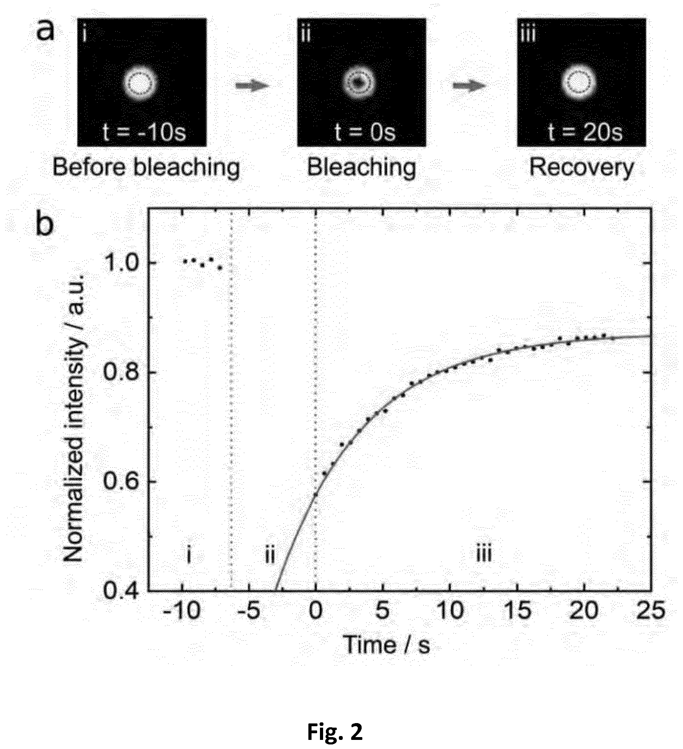

Fig. 2 shows FRAP measurements of microfluidic water-in-oil droplets functionalized with cholesterol-tagged Atto488-labeled single-stranded DNA. a) Confocal fluorescence images of a droplet (bottom plane) i: before bleaching, ii: directly after bleaching (circular bleaching area clearly visible, $\lambda$ ex = 488 nm), and iii: after recovery. The bleached area is highlighted with a red dashed circle. b) Representative recovery curve. Mean normalized intensity values within the bleaching area are plotted as a function of time. The solid line represents an exponential fit, which was used to determine the diffusion coefficient, here: D =0.412 $\mu m^2 s^{-1}$. The three phases of the experiment (i-iii) are indicated.

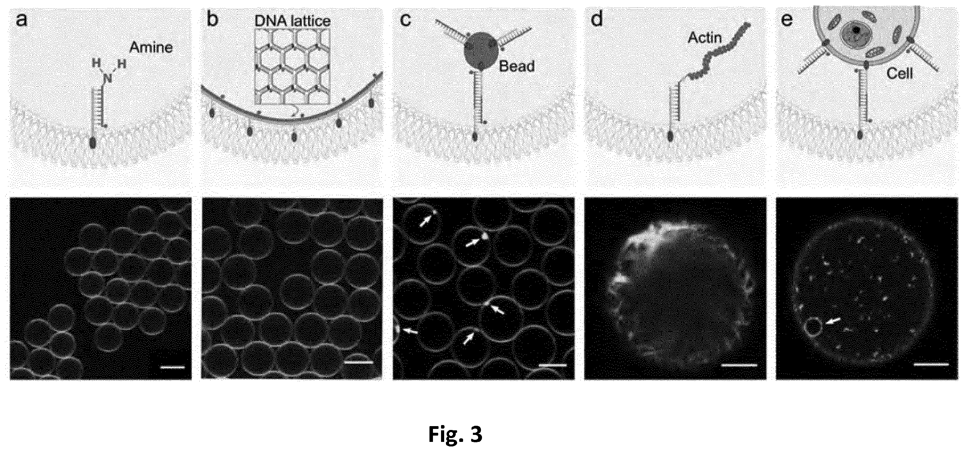

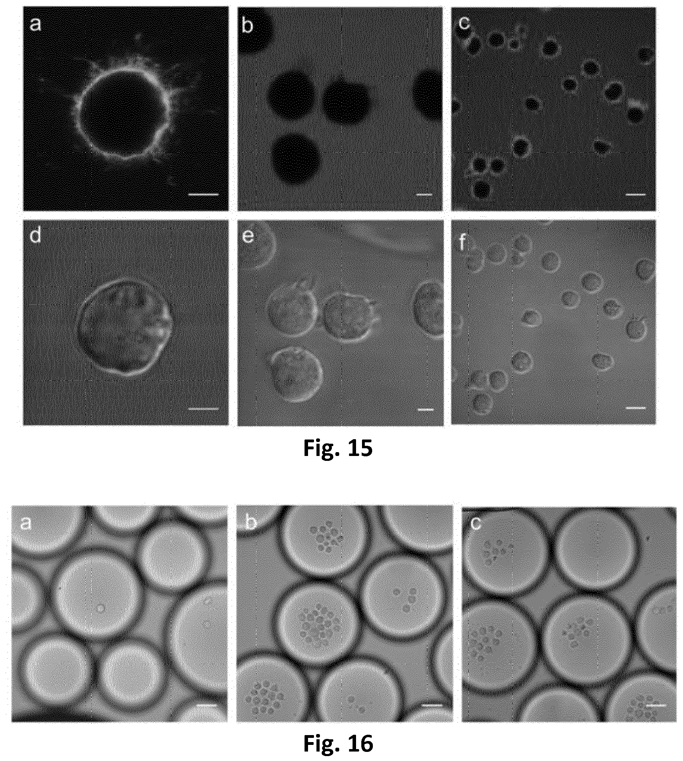

Fig. 3 shows how microfluidic water-in-oil droplets according to the invention can be functionalized with various components via complementary DNA-tags. Schematic illustrations in the top row show a close-up of a single cholesterol-tagged DNA handle (correspond to the above mentioned first compound 16) attached to the droplet periphery interacting with the added component. The bottom row shows confocal fluorescence images of entire water-in-oil droplets, in groups or as a close up of a single droplet. Added components were as follows: a) complementary amine-tagged DNA (as above mentioned second compound 34 having SEQ ID No. 3 Atto488-labeled, compound #3); b) an Atto488-labeled hexagonal DNA-lattice formed from compounds #4i to #4iii having SEQ ID No. 4 to 6; c) plain multifluorescent polystyrene microspheres grafted with complementary FITC-labeled DNA (compound #8 with SEQ ID No. 10; $\lambda_{ex}$ = 488 nm) via hydrophobic interactions; d) filamentous actin (containing 10 mol% biotinylated actin and 1 mol% At-to488-labeled actin). The actin filaments were functionalized with complementary biotinylated DNA via biotin-streptavidin linkage; e) T-lymphocyte (Jurkat) incubated with complementary cholesterol-tagged DNA. The cholesterol-tagged DNA inserts into the lipid membrane of the cells and through two complementary DNA strands binds the cholesterol-tagged DNA on the periphery of the droplets (see Figure 15). Scale bars in the lower row of images are: 30 $\mu$m in a and b, 20 $\mu$m in c and e, 5 $\mu$m in d. For DNA sequences see Supporting Information, Table 1 and Sequence listing.

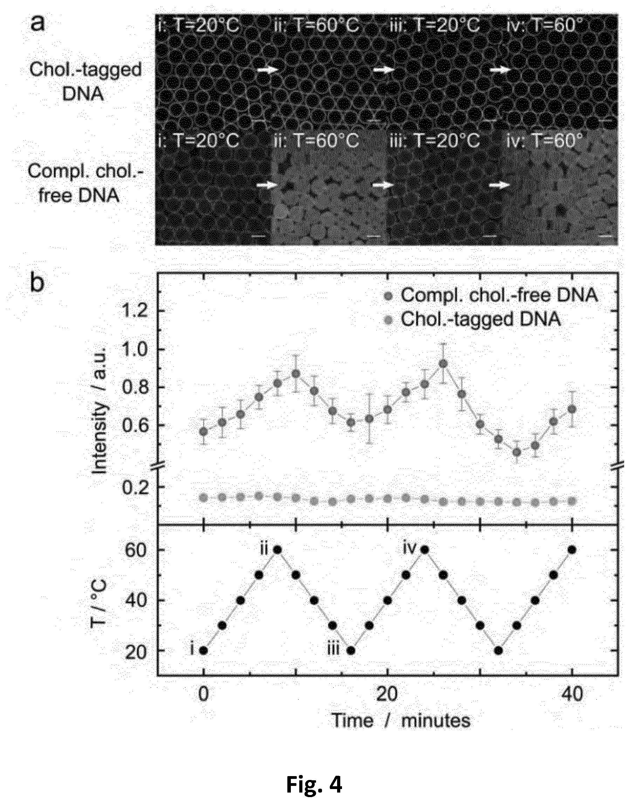

Fig. 4 shows the temperature-responsive reversibility of droplet functionalization. a) Confocal fluorescence images of cholesterol-tagged DNA (top row, labeled with Atto488, $\lambda_{ex}$ =488 nm) and complementary DNA (bottom row, labeled with ROX, $\lambda_{ex}$ =580 nm) in the same surfactant-stabilized droplets for two consecutive temperature cycles (heating from 20 °C to 60 °C, cooling to 20 °C, then heating to 60 °C). Scale bars: 30 $\mu$m. b) Average fluorescence intensity within the droplets (periphery excluded) during the temperature cycles for the cholesterol-tagged DNA (orange) and its complementary strand (green) as a function of time. The temperature is plotted below. Error bars correspond to the standard deviation of 17 measurements. The time points when the four images shown in a) were taken are indicated. The complementary strand binds to the cholesterol-tagged DNA handle at the periphery at lower temperatures. Above the melting temperature of the duplex, the complementary cholesterol-free DNA was homogeneously distributed within the aqueous phase of the same droplet (10 mM Tris-HCl, 1 mM EDTA, 5 mM $MgCl_2$, pH 8). Furthermore, the cholesterol-tagged DNA anchor remained at the droplet periphery, showing the high entropical benefit of cholesterol-insertion into the surfactant layer. For DNA sequences, see Supporting Information, Table 1.

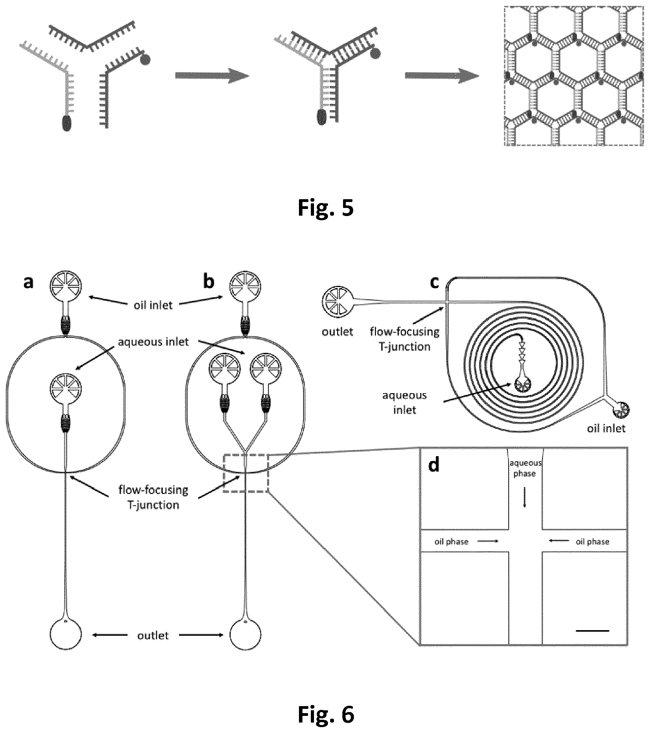

In Fig. 5 a schematic illustration of the DNA lattice design, adapted from Kurokawa et al. [3] is provided. The lattice is composed of three DNA sequences (see Table 1, compounds #4i, ii, and iii containing SEQ ID No. 4 to 6) with sticky ends for polymerization into hexagonal lattices. One of the DNA strands has a 3' cholesterol tag (red, oval shape), another is tagged with Atto488 (green circle). The lattice was assembled by mixing the three strands at equimolar concentrations of 2 $\mu$M in a buffer containing 10 mM Tris, 1 mM EDTA and 10 mM $MgCl_2$. The mixture was annealed in a thermocycler (Biorad) by heating to 60 °C for 10 minutes and subsequently encapsulated into microfluidic droplets via the aqueous phase.

Fig. 6 provides a schematic drawing of the layout of microfluidic devices for the production of surfactant-stabilized droplets. a) Device with one oil-inlet and one water-inlet used for the encapsulation of cholesterol-tagged DNA as well as the joint encapsulation of cholesterol-tagged and complementary DNA (amine-tagged, cholesterol-tagged, fluorescently-labeled DNA and the DNA lattice); b) Device with one oil-inlet and two water-inlets used for actin and bead encapsulation with DNA. The cholesterol-tagged DNA was supplied via one inlet and the respective complementary DNA strands via the second one to avoid aggregation prior to droplet formation; c) Device with a coiled water inlet used for Jurkat cell encapsulation. The coil provides better separation of the cells. The microfluidic PDMS devices (Sylgard184, Dow Corning, USA) were fabricated according to a previously published protocol. [43] For confocal imaging, the droplets were collected from the outlet and sealed in a simple observation chamber as described previously. [44]

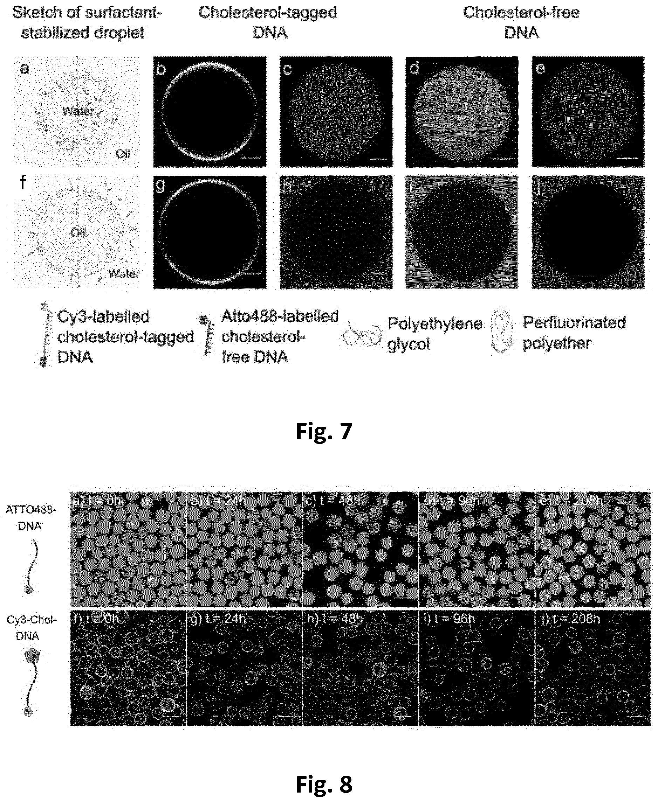

Fig. 7 shows the interaction of cholesterol-tagged and cholesterol-free DNA with surfactant-stabilized droplets employing a fluorescence labeled aqueous phase. a) Schematic illustration of a water-in-oil droplet (left of dotted red line: with cholesterol-tagged DNA, right side: with cholesterol-free DNA); b,d) Confocal fluorescence images of a water-in-oil droplet with cholesterol-tagged Cy3-labeled DNA ($\lambda_{ex}$ = 550 nm) (b) or cholesterol-free Atto488-labeled DNA ($\lambda_{ex}$ = 488 nm) (d) in the internal aqueous phase; c,e) Aqueous phase labeled via dissolving an Alexa405 dye ($\lambda_{ex}$ = 405 nm) for droplets containing cholesterol-tagged DNA (c) or cholesterol-free DNA (e) in the internal aqueous phase; f) Schematic illustration of an oil-in-water droplet (left of dotted red line: with cholesterol-tagged DNA, right side: with cholesterol-free DNA), g,i) Confocal fluorescence images of an oil-in water droplet with cholesterol-tagged Cy3-labeled DNA (g) and cholesterol-free Atto488-labeled DNA (i) in the external aqueous phase; h,j) aqueous phase labeled via an Alexa405 dye for cholesterol-tagged DNA (g) and cholesterol-free DNA (i) in the external aqueous phase. Whereas cholesterol-tagged DNA self-assembles at the droplet periphery, cholesterol-free DNA remains homogenously distributed in the aqueous phase, which consisted of 10 mM Tris-HCl, 1 mM EDTA, 5 mM $MgCl_2$, 1 per mille Alexa405 dye (Thermo Fisher Scientific), pH 8. Scale bars: 10 $\mu$m.

Fig. 8 shows images demonstrating that cholesterol-tagged DNA remains stable at the droplet interface. a,b,c,d,e) Confocal fluorescence images of ATTO488-labeled cholesterol-free DNA encapsulated within water-in-oil droplets at 0 h, 24 h, 48 h, 96 h and 208 h; f,g,h,i,j) Confocal fluorescence images of cholesterol-tagged Cy3-labeled DNA encapsulated within water-in-oil droplets at 0 h, 24 h, 48 h, 96 h and 208 h. The cholesterol-free DNA remains homogeneously distributed in the droplet's lumen throughout several days, indicating both that there is no unspecific binding to the periphery and that the water-in-oil droplet remains stable. In contrast, the cholesterol-tagged DNA is only distributed along the droplets periphery showcasing the strong hydrophobic surfactant-cholesterol interaction. The aqueous phase contained 10 mM Tris-HCl, 1 mM EDTA, 5 mM $MgCl_2$, pH 8 and 4 $\mu$M DNA. Scale bars: 50 $\mu$m.

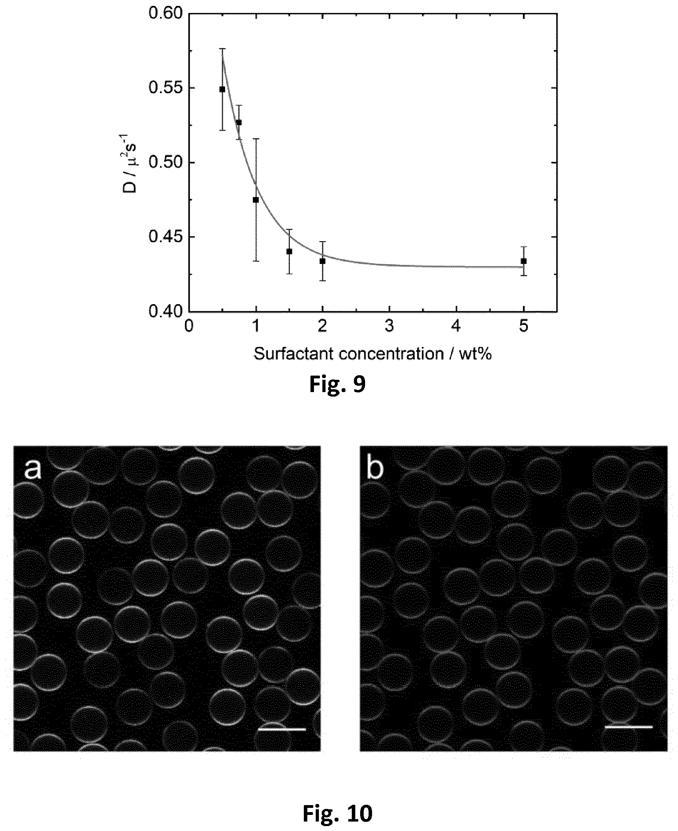

Fig. 9 shows the diffusion coefficient of cholesterol-tagged Atto488-labelled DNA encapsulated in surfactant-stabilized droplets as a function of surfactant concentration (in weight percent). The error bars correspond to the standard deviation of at least 9 independent measurements. If the droplet moved during the acquisition interval, the recorded data was not taken into consideration. The data points were fitted with an exponential decay function (solid line).

Fig. 10 provides a confocal fluorescence imaging of droplets containing cholesterol-tagged DNA and a complementary DNA strand. a) Cholesterol-tagged DNA labeled with Cy3 at the droplet periphery; b) Complementary DNA labeled with Cy5 without a cholesterol-tag in the same water-in-oil droplets (containing 10 mM Tris-HCl, 1 mM EDTA, 5 mM $MgCl_2$, pH 8). The complementary DNA co-localizes with the cholesterol-tagged DNA, indicating successful DNA duplex formation. Scale bar: 50 $\mu$m.

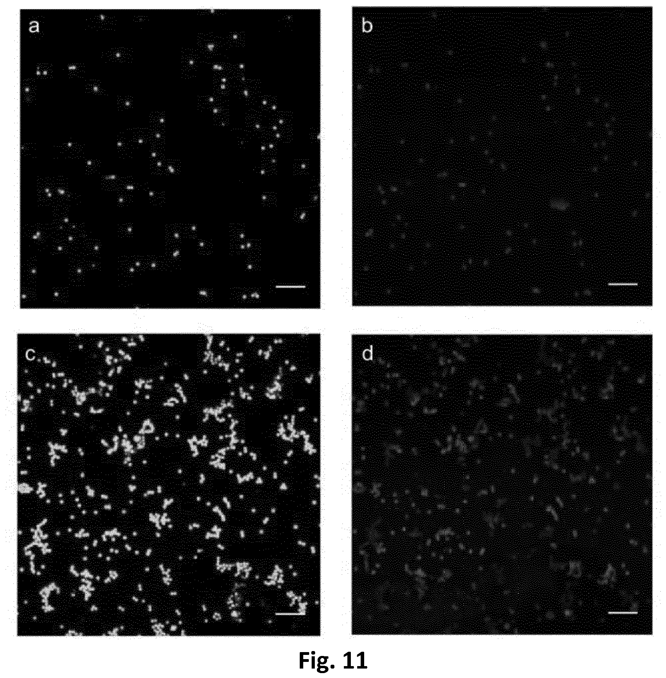

Fig. 11 shows that cholesterol-tagged DNA binds polystyrene microspheres. a) Fluorescent (YG) microspheres in an aqueous solution (10 mM Tris-HCl, 1 mM EDTA, 5 mM $MgCl_2$, pH 8); b) Cy5-labeled DNA attached to the same beads via cholesterol-tagged DNA; c,d) Same as (a,b) but at a higher bead concentration, resulting in increased bead-bead interactions and clustering. Scale bar: 30 $\mu$m.

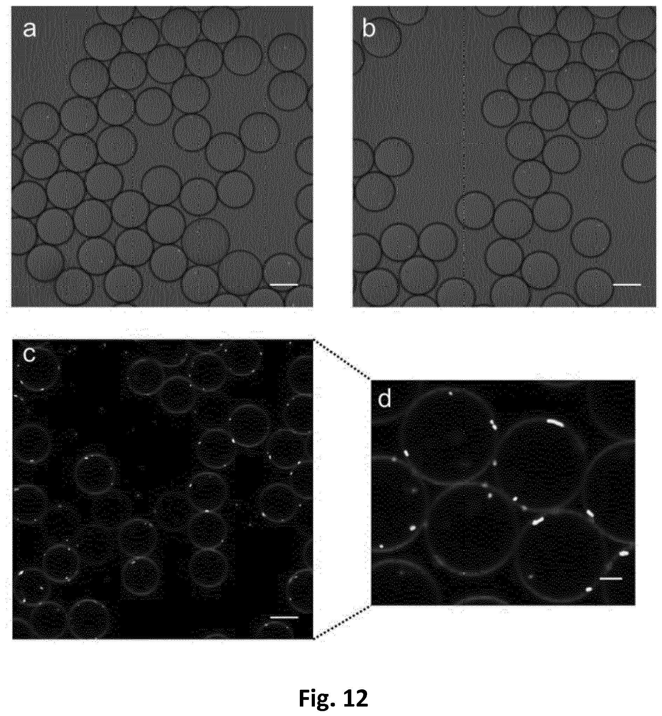

Fig. 12 shows images of the functionalization of water-in-oil droplets with beads (diameter: 2 $\mu$m) via DNA-tags. a,b) Fluorescent (YG) microspheres (green) in water-in-oil droplets containing an aqueous solution (10 mM Tris-HCl, 1 mM EDTA, 5 mM $MgCl_2$, pH 8) without cholesterol-tagged DNA (control). For clarity, brightfield-and fluorescence images were overlaid. The beads were distributed randomly, neither favoring the droplet lumen nor its periphery. c,d) Fluorescent (YG) microspheres (green) in an aqueous solution containing cholesterol-tagged as well as a complementary Cy5-labeled DNA (red). The beads are localized at the droplet periphery. Scale bar: 30 $\mu$m in a,b,c; 10 $\mu$m in d.

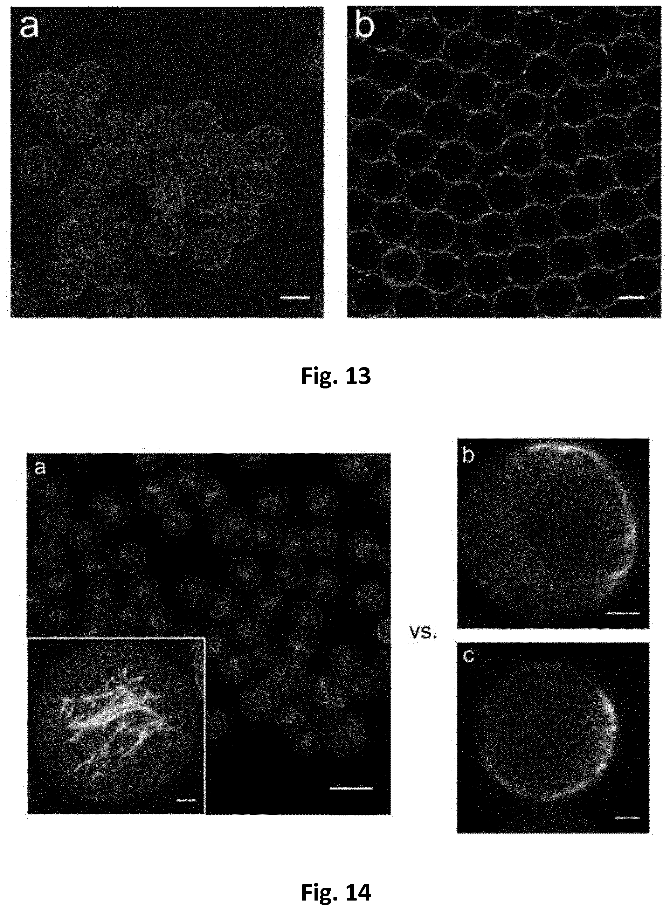

Fig. 13 shows the functionalization of water-in-oil droplets with carboxylate-modified beads (diameter: 0.3 $\mu$m) via DNA-tags. a) Fluorescent (YG) carboxylate-modified microspheres (green) in water-in-oil droplets. The aqueous solution consists of 10 mM Tris-HCl, 1 mM EDTA, 5 mM $MgCl_2$, pH 8 with added DNA, namely cholesterol-tagged DNA (compound #7 in table 1) and its complementary Cy5-labeled DNA (red, compound #7 in table 1) but without the interconnecting strand (compound #8 from table 1). For clarity, the fluorescence images were overlaid. The beads were distributed randomly, neither favoring the droplet lumen nor its periphery, b) Fluorescent (YG) microspheres (green) in an aqueous solution containing cholesterol-tagged DNA and its complementary Cy5-labeled DNA (red) as well as the interconnecting strand (compound #8 from table 1). The beads were localized at the droplet periphery. This opens up opportunities for diverse means of functionalizing droplets via modified beads. Scale bar: 30 $\mu$m.

Fig. 14 shows the formation of cortex-like actin structures inside droplets via DNA-tags. a) Filamentous (F-) actin inside surfactant-stabilized droplets without DNA. Actin filaments were distributed homogenously within droplets; b,c) F-actin inside surfactant-stabilized droplets with 10% biotinylated actin binding a strand of biotinylated DNA via streptavidin. The filaments are tethered to the droplet periphery via a complementary cholesterol-tagged DNA handle (like the one shown in Figure 3d). F-actin is found at the droplet interface. Scale bars: 50 $\mu$m in a) and 5 $\mu$m in the other images. For the actin polymerization protocol see the below Material and Methods section.

Fig. 15 shows that cholesterol-tagged DNA attaches to Jurkat cells. a) Cy3-labeled cholesterol-tagged DNA mixed with the cell culture medium attached to the cell membrane; b) ROX-labeled DNA without a cholesterol-tag, added with the cell culture medium was homogeneously distributed in the extracellular space; c) The ROX-labeled strand attached to the cell periphery in the presence of its complementary cholesterol-tagged DNA strand; d-f) Corresponding brightfield images. Scale bars: 3 $\mu$m in a, b, d and e; 10 $\mu$m in c and f.

Fig. 16 shows that Jurkat cells are located at the bottom of surfactant-stabilized droplets in the absence of DNA linkers. a,b,c) Jurkat cells were encapsulated in droplets with RPMI cell culture medium without the addition of DNA. The cells sank to the bottom of the droplets indicating a lack of directed interaction with the droplet interface. This is the case both in single cells (a) and at higher cell concentrations (b,c). Scale bar: 30 $\mu$m.

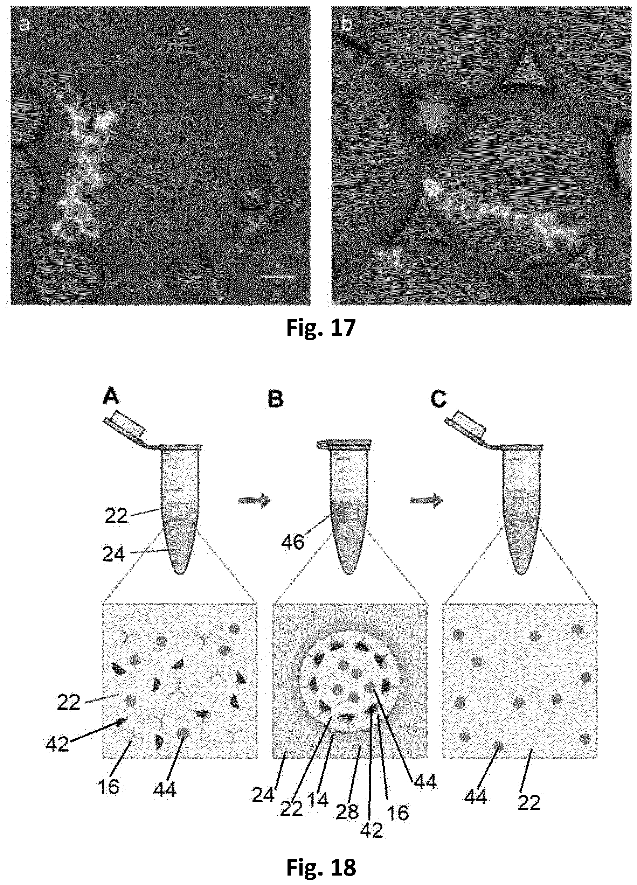

Fig. 17 shows that Jurkat cells can form droplet spanning multicellular clusters in the presence of the DNA linkers. a,b) A high concentration of Jurkat cells ($10^7$ per milliliter) encapsulated in droplets with RPMI cell culture medium together with the DNA linkers. A representative composite brightfield and fluorescence image (DNA is FITC-labeled) is shown. Higher cell and DNA concentrations result in an increase of cell-cell interactions, resulting in droplet-spanning multicellular clusters. Scale bar: 20 $\mu$m.

Fig. 18 shows a schematic illustration of the separating process according to the present invention. In a first step A an aqueous phase (first fluid 22) and an oil phase (second fluid 24) are provided such that these phases are in contact with each other and an interface is formed there between. The first fluid 22 comprises component A 42 and a further component B 44 and the second fluid 24 comprises a surfactant 28. A first compound 16 containing a hydrophobic part covalently linked to a molecular recognition site which can selectively bind the component A 42 that is supposed to be removed from the mix is contained in the first fluid 22. The first compound 16 attracts component A 42 to the fluid interface and the supernatant - containing only the remaining components (component B 44, single or multiple components) - can be recovered. The separation efficiency depends on the interface area between the first fluid 22 and the second fluid 24. This area can be increased drastically by forming emulsion droplets. Vigorous shaking or vortexing induces the formation of a dispersion 46 containing emulsion droplets - drastically increasing the surface area for attachment of the first compound 16 and the component A. The same can be achieved with microfluidics. After an incubation period (normally minutes are sufficient), the droplets are broken up by addition of a destabilizing surfactant (e.g. perfluoro-1-octanol (PFO)). As before, the remaining components can be recovered. It is also possible to recover component A 42 by subsequently denaturing the binding site (e.g. by heating, enzyme digestion, not shown in Fig. 18).

The separating process is applicable for any fluid purification, as long as it is possible to couple a molecular recognition site for the component of interest to a hydrophobic part. Thereby, the size and the molecular weight of the components can range from atoms to cells: Applications could include water purification (e.g. removal of contaminants like heavy metals), filtration of body fluids (e.g. removal of pathogenic components), cell sorting (e.g. removal of bacteria, sorting of mixed cell populations according to their surface markers) and the like.

Here, we present a broadly applicable method for functionalizing microfluidic droplets utilizing the hydrophobic interaction of cholesterol-tagged DNA with the droplet-stabilizing surfactant. We show that DNA handles can serve as reversible anchoring points for various components including reactive groups, DNA nanostructures, beads, proteins or even cells. The use of off-the-shelf available DNA holds considerable advantages compared to standard methods for droplet functionalization, including: the broad scope of options for site-directed chemical functionalization, the addressability and programmability due to specific base pairing as well as the reversible stimuli-responsive binding properties of DNA. Therefore, cholesterol-tagged DNA handles bear great potential for various applications in droplet-based microfluidics. An overview of DNA handles described below is provided in Table 1.

Table 1:

| SEQ ID No. | Compound # | DNA sequence | Fig. |
|---|---|---|---|
| 1 | 1 | 5'Cy3 (or Atto488)/TTCCTTCTATGCATCA/3'CholTEG | 1b, e; 2; 3d |
| 2 | 2 | TCTATGCATCA/3'Atto488 | 1c,f |
| 3 | 3 | 5'Atto488/TGATGCATAGAAGGAA/3'Amine | 3a |
| 4 | 4i | 5'Atto488/GCTCGAGCCAGTGAGGACGGAAGTTTGTCGTAGCATCGCACC | 3b |
| 5 | 4ii | GCTCGAGCCAACCACGCCTGTCCATTACTTCCGTCCTCACTG/3'CholTEG | 3b |
| 6 | 4iii | GCTCGAGCGGTGCGATGCTACGACTTTGGACAGGCGTGGTTG | 3b |
| 7 | 5 | ACCAGACAATACCACACAATTTT/3'CholTEG | 3b |

(continued)

| SEQ ID No. | Compound # | DNA sequence | Fig. |
|---|---|---|---|
| 8 | 6 | 5'Atto488/TTCTCTTCTCGTTTGCTCTTCTCTTGTGTGGTATTGTCTAAGAG AAGAGTT/3'BioTEG/ | 3d |
| 9 | 7 | CTACTATGGCGGGTGATAAAAAACGGGAAGAGCATGCCCATCCAA/3CholTEG | 3d |
| 10 | 8 | 5'FITC/GGATGGGCATGCTCTTCCCGTTTTTTATCACCCGCCATAGTAGGAG GTAAGTTATGACAGGTCCA | 3c,e |
| 11 | 9 | 5'Cy5/GGATGGGCATGCTCTTCCCGTTTTTTATCACCCGCCATAGTAGAGGAC CTGTCATAACTTACCTG | 3c,e |
| 12 | 10 | 5'Atto488/TTCCTTCTATGCATCA/3'CholTEG | 4 |
| 13 | 11 | TCTATGCATCA/3'ROX | 4 |

Results and discussion

Surface-functionalization of surfactant-stabilized droplets with cholesterol-tagged DNA

Droplet-based microfluidics relies on amphiphilic polymer-based agents (surfactants) for the formation of stable water-in-oil or oil-in-water emulsion droplets. We designed a short 3' cholesterol-tagged DNA oligomer to investigate its self-assembly into the surfactant-layer of microfluidic droplets. The 16 base-long DNA (for DNA sequences see Table 1 and sequence listing) additionally contained a covalently linked fluorophore (Cy3) for visualization purposes. Having tested that the fluorescent dye does not influence the binding properties of the DNA to the droplet periphery, an Atto488-tagged DNA oligomer without cholesterol served as a control.

Figure 1a shows a sketch of a DNA-containing water-in-oil droplet. The DNA is supplied via the aqueous inlet (2 $\mu$M DNA in 10 mM Tris-HCl, 1 mM EDTA, 5 mM MgCl$_2$, pH 8) of a microfluidic droplet-production device (flow focusing PDMS device, see Supporting Information, Figure 6). The confocal image in Figure 1b shows the self-assembled cholesterol-tagged DNA at the water-facing periphery of the surfactant-stabilized droplet. This process happens within milliseconds after droplet formation (see Supporting Information). The cholesterol-tagged DNA remains stably attached to the droplet interface for days (Figure 8). This is in accordance with interfacial tension (IFT) measurements, which showed no dramatic change of IFT in droplets containing cholesterol-tagged DNA compared to droplets containing cholesterol-free DNA (see Supporting Information, Table 2). In contrast to cholesterol-tagged DNA, cholesterol-free single-stranded DNA is homogeneously distributed in the aqueous phase inside the droplet (Figure 1c, for clarity the aqueous phase was labeled with a fluorescent dye in Figure 7). This proves that the self-assembly of the DNA at the droplet periphery is due to hydrophobic interactions between the DNA-linked cholesterol moiety and the surfactant molecules - rather than electrostatic interactions between DNA and surfactants. To broaden the range of possible applications of DNA-functionalized droplets, we demonstrate that our system also works for oil-in-water droplets (see Materials and Methods). Figure 1e shows cholesterol-tagged DNA attached to the aqueous exterior of the droplet, while the cholesterol-free DNA remains homogeneously distributed in the aqueous phase surrounding it (Figure 1f).

To gain more insights into the interaction of the cholesterol-tagged DNA and the droplet periphery, we set out to probe the mobility of the DNA in the surfactant layer. To this end, we performed fluorescence recovery after photobleaching (FRAP) measurements with the water-in-oil droplets containing cholesterol-tagged DNA. A confocal plane at the bottom of the droplet was selected and a circular bleaching area (5 $\mu$m diameter) was defined. The measurement procedure is illustrated in Figure 2a. It consists of a pre-bleaching time span (i), followed by bleaching of the circular area (ii), and a recovery period (iii). The mean intensities acquired from the images before bleaching were used to calculate normalized intensity values. From an exponential fit of the normalized recovery intensities, the diffusion coefficient was calculated (for more details please see Supporting Information below).

A representative FRAP intensity curve as a function of time is shown in Figure 2b. First, it should be noted that the cholesterol-tagged DNA is indeed diffusive when incorporated into the droplet periphery (Figure 2a). We obtained a diffusion coefficient of $D = (0.41 \pm 0.01)$ $\mu$m$^2$s$^{-1}$ based on 17 independent experiments. This value is comparable to the diffusion coefficient of block copolymer surfactants,[6] but two orders of magnitude smaller than typical diffusion coefficients of high-cholesterol content lipid membranes. [28] We further demonstrated that the diffusion coefficient increases with decreasing surfactant concentrations (Supporting Information, and Figure 9).

Droplet functionalization via DNA handles

In order to verify that the single-stranded DNA handles at the droplet periphery are accessible for duplex formation, a complementary Atto488-labeled DNA sequence (without any cholesterol-tag) was supplied via the aqueous phase during droplet production. In the presence of the DNA handles (which were not fluorescently labeled, and thus are not visible in the confocal images), the cholesterol-free DNA strand was found at the droplet periphery, indicating successful duplex formation (Supporting Information, Figure 10). Without the DNA handles, the cholesterol-free DNA was homogeneously distributed within the droplet as shown in Figure 1c.

With this system in place, we made use of the large toolbox of chemical modifications available for DNA and functionalized the droplet periphery with a variety of components. A broadly applicable modification is the attachment of commonly used functional groups. One example is a commercially available amine-terminated DNA oligo (see Materials and Methods). We used confocal fluorescence imaging to confirm the successful attachment of the amine-modified DNA (labeled with Atto488) to the unlabeled DNA handles at the droplet periphery (see Figure 3a). As a next step, we demonstrated that the DNA handles can also serve as anchoring points for DNA nanostructures. For this purpose, we assembled a hexagonal Atto488-labeled DNA lattice (see Supporting Information, Figure 5 and Table 1). Its adhesion to the compartment periphery is visible in the confocal image in Figure 3b. Beyond functional groups and DNA nanostructures, we employed the cholesterol-tagged DNA handles as attachment points for polystyrene microspheres with a diameter of 2 $\mu$m (see Materials and Methods). For this purpose, we designed a longer DNA-based linker, which provides more space between the microspheres and the droplet periphery. The linker is made up of two cholesterol-tagged DNA duplexes that each have a single-stranded DNA overhang. These overhangs can interconnect, creating a strong linker, as shown in the illustration in Figure 3c (for sequences see Table 1 and sequence listing). This linking method requires just one rather than two different cholesterol-tagged DNA sequences, making it more cost-effective than the direct link. The microspheres were first incubated with one of the cholesterol-tagged duplexes. As shown in Figure 11, the DNA adheres to the surface of the microsphere. The second cholesterol-tagged DNA duplex served as an attachment point at the droplet periphery, binding DNA-coated microspheres via the single-stranded DNA overhang. As visible in the confocal image in Figure 3c, the microspheres attached to the droplet periphery, whereas when DNA was missing, they were distributed randomly (see Figure 12). Note that it is also possible to use modified microspheres of different sizes carrying functional groups (see Figure 13). Next, we went one step further by attempting to assemble an actin cortex inside the microfluidic droplet. Again, our approach relied on the DNA-handle-system, which we modified to link actin filaments to the droplet periphery. We first polymerized a mixture of G-actin monomers that were modified with either Alexa488 or biotinylation or that were left unmodified into up to 5 $\mu$m long filaments. This mixture was then added to a solution containing biotinylated DNA and streptavidin and encapsulated into the droplets. The confocal image in Figure 3d shows that we were successful in binding actin filaments to the droplet periphery, building up a well-defined actin cortex. The filaments are arranged in a spherical manner at the droplet periphery, whereas excess labeled monomers can be found in the droplet lumen. In a control without the DNA handles, the actin filamets remained homogeneously distributed within the droplet (Figure 14). In living cells, the binding of actin to the periphery involves a multitude of proteins. Remarkably, we have achieved an artificial imitation using much fewer components - demonstrating the potential of DNA-based linkers in bottom-up synthetic biology.

Increasing the level of complexity one step further, we went from the attachment of purified proteins to living cells. Droplets have previously been used as microreactors for cells to perform high-throughput single cell analysis. Nonetheless such applications often require controlled interactions between encapsulated cells and the droplet periphery. We therefore set out to test if our DNA-handle-system is capable of anchoring living cells at the droplet periphery. We first incubated Jurkat cells with a cholesterol-tagged DNA duplex as used previously for the microspheres. The linkage via four rather than two DNA strands ensures a larger distance between the cell and the droplet periphery, leaving the cells in their native environment and avoiding unwanted interactions with the surfactant molecules. The confocal images in Figure 15 show the DNA inserting into the lipid bilayer membrane of the cells. As with the microspheres, we could bind the cells to the DNA-functionalized droplets periphery via the single-stranded overhang on the DNA duplex. Figure 3e shows an encapsulated Jurkat cell, which was attached to the droplet periphery via the described DNA linkers. Increasing the concentration of cells, we also observed DNA-mediated cell-cell interactions, building up droplet-spanning multicellular clusters (see Figure 17). The fluorescent DNA clusters in the droplet lumen, visible in Figure 3e, likely result from the use of cell culture medium containing proteins and hydrophobic molecules with which the cholesterol can interact. All these experiments exemplify the ability of DNA to act as a linker between the droplet periphery and various components making it a universally applicable tool for the functionalization of surfactant-stabilized droplets.

Temperature-responsive reversibility

For many applications, stimuli-responsive droplet functionalization is highly desirable. This requires mechanisms to turn interactions with the droplet periphery on and off upon demand. With the DNA-handle-system, we can make use of the temperature-dependency of Watson-Crick base pairing between strands of DNA to achieve stimuli-responsive reversibility of the binding.

We carried out temperature cycling experiments during which the DNA-containing droplets were placed on a temperature-controlled stage during confocal imaging. These experiments can reveal whether a) the cholesterol-tagged DNA is stable at the periphery even at elevated temperatures and b) the complementary DNA (which can carry diverse functional groups, as shown in Figure 3) can be reversibly detached from the periphery. Figure 4a shows confocal fluorescence images of the cholesterol-tagged DNA (top row, Atto488-labeled) and the complementary DNA (bottom row, ROX-labeled) encapsulated together in a droplet, during temperature cycling experiments. While the cholesterol-tagged DNA remains bound to the periphery at temperature between 20 °C and 60 °C, the complementary DNA detaches at elevated temperatures. The melting temperature of the DNA duplex (i.e., the temperature when half of the complementary DNA should be unbound) formed by compounds #10 and #11was calculated to be approximately 28.3 °C. In Figure 4b, we plotted the average fluorescence intensity within droplets (periphery excluded) and the applied temperature as a function of time. When the fluorophore-tagged DNA was bound to the periphery this value was low but it increased as more DNA detached. The intensity was measured for cholesterol-tagged At-to488-labeled DNA (orange) as well as for the complementary ROX-labeled DNA (green). The cholesterol-tagged DNA is found at the periphery at all times and temperatures - hence the fluorescence intensity in the droplet lumen remains low. This shows that the hydrophobic interaction between surfactant and cholesterol is stronger than the sum of the hydrogen bonds between all DNA bases. The insertion of the cholesterol-tagged DNA is entropically beneficial and stable. In contrast, the plot clearly shows the periodic oscillations of the complementary DNA with each temperature cycle. This means that the complementary DNA is located mainly at the periphery at 20 °C and found within the droplet lumen at higher temperatures. This is in agreement with the calculated melting temperature of the employed DNA of 28.3 °C. Because of the low melting temperature, even at 20 °C, not all of the complementary DNA may be bound. The binding can be enhanced by using longer DNA sequences with higher melting temperatures as we did in Figure 3. In addition, hysteresis effects can be observed by comparing the intensity maxima with the temperature, according to which the maximum is reached when the temperature drops back to 50 °C. This is conclusive considering that the system needs some time to equilibrate, which becomes more clear, when looking at the temperature of the heating plate as depicted in Figure 4. From these experiments, we can conclude that the functionalization of the droplet periphery is reversible.

Conclusion

In the present study we demonstrated a versatile method for the functionalization of microfluidic droplets using DNA-tags. We showed that cholesterol-tagged DNA self-assembles into the periphery of surfactant-stabilized water-in-oil and oil-in-water droplets due to the hydrophobic interactions between the surfactant molecules and the cholesterol-tag at the interface between oil and water. Furthermore, by means of FRAP measurements we found that the DNA anchored in the surfactant layer is diffusive with $D = (0.41 \pm 0.01)\ \mu m^2 s^{-1}$ and that the diffusivity depends on the surfactant concentration. Importantly, we proved that the DNA strand attached to the periphery remains fully addressable. It can act as a sequence-specific and programmable anchor for a variety of components attached to a complementary DNA strand. By creating a link between the droplet periphery and one of either amine-groups, a DNA lattice, plain microspheres, actin filaments or living cells, we showcased the versatility of our DNA handles. In principle, the system can be extended to any other functional group and component that can be linked to DNA, e.g. thiol-groups, adenylation, phosphorylation, various DNA nanostructures, gold nanoparticles, lipid vesicles or other types of proteins and cells. Conveniently, various functional groups covalently linked to DNA are commercially available. Lastly, we showed that droplet functionalization as a result of DNA duplex formation, is temperature dependent and fully reversible. The temperature at which unbinding happens is fully controllable by choosing a DNA sequence with the desirable melting point. In addition, other stimuli-responsive DNA motifs, like pH- and light-responsive elements, could be incorporated to achieve reversibility of droplet functionalization. All in all, this study shows the potential of DNA handles to specifically and reversibly functionalize surfactant-stabilized droplets for diverse applications in droplet-based microfluidics. It is to be understood that the effects demonstrated for DNA based recognition sites anchored to the periphery of microdroplets can be expected to also appear with other non-DNA based recognition sites based on nucleic acid fragments, including RNA and artificial nucleic acids, such as for example peptide nucleic acids or other molecular recognition sites, based for example on antibody-antigene recognition.

Material and methods

Design and assembly of DNA-tags

A set of random fixed-length DNA sequences was generated in MATLAB (MathWorks, Inc.) using the randseq command. The sequences were analyzed in NUPACK 39 and chosen such as to provide stable base-pairing with complementary sequences at room temperature and an overall low tendency to form secondary structures and self-dimers. The selected DNA oligos are DNA SEQ ID No. 1 to 13, listed also in Table 1, were purchased from Integrated DNA Technologies, Inc. or biomers.net GmbH. HPLC purification was performed for DNA oligos carrying modifications (Cy3, Cy5, FITC, ROX, Atto488, cholesterol-TEG, biotin or amine). The DNA oligos were diluted in Milli-Q water at a stock concentration of 100 $\mu$M, aliquoted and stored at -20 °C until use. Before the experiment, cholesterol-tagged DNA oligos were heated to 60 °C for 5 minutes to reduce aggregation. A concentration of 2 $\mu$M of each oligonucleotide was used in the aqueous solution, if not stated otherwise.

Microfluidic formation of DNA-functionalized surfactant-stabilized water-in-oil droplets

Microfluidic PDMS-based (Sylgard 184, Dow Corning, USA) devices for the formation of water-in-oil droplets were produced and assembled as described previously. [4] Figure 6 shows a map of the device, which features a water and an oil channel that meet at a flow-focusing T-junction for droplet formation. The aqueous phase is made up of Milli-Q water containing 5 mM MgCl$_2$ , 1x Tris-EDTA buffer, pH 8 (Buffer 1) and 2-4 $\mu$M DNA unless otherwise specified. The oil-phase contains either 2 wt% of Perflouro-polyether-polyethylene glycol (PFPE-PEG) block-copolymer fluorosurfactants (PEG-based fluorosurfactants from Ran Biotechnologies, Inc.) or 2.5 mM of a custom synthesized triblock-copolymer PFPE-PEG-PFPE triblock-copolymer surfactant [1,2] dissolved in HFE-7500 oil (from DuPont). The custom synthesized triblock-copolymer PFPE-PEG-PFPE triblock-copolymer surfactant was synthesized as described by Platzman et al. [1] and by Janiesch et al. [2] The flow rates were generally set to 900 $\mu$lh$^{-1}$ for the oil phase and 300 $\mu$lh$^{-1}$ for the water phase using syringe pumps PUMP 11 ELITE (Harvard apparatus, USA). The fluids were injected with 1 ml syringes (Omnifix, B.Braun, Germany) connected by a cannula (Sterican R 0.4 × 20 mm, BL/LB, B.Braun, Germany) and PTFE-tubing (0.4 × 0.9 mm, Bola, Germany). To observe the production process, an Axio Vert.A1 (Carl Zeiss AG, Germany) inverse microscope was used. With these settings, homogeneous droplets with a diameter of approximately 30 $\mu$m were produced at a rate of 1 kHz.

Formation of surfactant-stabilized oil-in-water droplets

Oil-droplets with a surrounding aqueous phase were produced manually by shaking. For this purpose, 10 $\mu$l of the surfactant-containing oil phase were added to 700 $\mu$l of the DNA-containing aqueous solution. The composition of the oil and the water phase were chosen as before. The probe was manually shaken until oil-in-water droplets formed (visible as a milky emulsion layer).

High-speed fluorescence imaging

For imaging the production of water-in-oil droplets containing Cy3-labeled cholesterol-tagged or cholesterol-free DNA (10 $\mu$M), a fluorescence illuminator (HBO 100, Carl Zeiss AG, Germany), FS43HE Filter (Carl Zeiss AG, Germany) and a 40x objective (LD Plan-Neofluar 40x/0.6 Korr, Carl Zeiss AG, Germany) were used. For imaging purposes, lower flow rates (30 $\mu$lh$^{-1}$ for aqueous phase and 120 $\mu$lh$^{-1}$ for oil phase) were chosen.

Confocal fluorescence microscopy

A confocal laser scanning microscope LSM 800 (Carl Zeiss AG) was used for confocal imaging. The pinhole aperture was set to one Airy Unit and experiments were performed at room temperature. The images were acquired using a 20x (Objective Plan-Apochromat 20x/0.8 M27, Carl Zeiss AG) and a 63x immersion oil objective (Plan-Apochromat 63x/1.40 Oil DIC, Car Zeiss AG). Images were analyzed with ImageJ (NIH, brightness and contrast adjusted).

FRAP measurements

FRAP measurements were performed using a Leica SP5 confocal microscope (Leica Microsystems, Germany), equipped with an argon laser and a 63x oil-immersion objective (HCX PL APO 63x/1.40-0.60; Leica Microsystems GmbH). Surfactant-stabilized water-in-oil droplets functionalized with compound #1 in Table 1 containing single-stranded DNA with SEQ ID No. 1 with an Atto488-tag on the 5' end and a cholesterol-tag on the 3' end were sealed in an observation chamber. Subsequently, a bleaching spot with a radius of 2.5 $\mu$m was defined at the confocal plane at the bottom of the droplet. Using the FRAP-WIZZARD, five images were recorded before bleaching, followed by 6.5 s bleaching and the acquisition of 35 images after bleaching. Representative images are shown in Figure 2. The frame rate was set to 0.65 s. The diffusion coefficient, which was averaged from 17 independent measurements, was derived from the recorded images using a custom-written MATLAB (MathWorks, Inc.) code as detailed in the Supporting Information below.

Attachment of amine groups, DNA nanostructures, beads, actin and cells to the DNA handles

For all attachment experiments, confocal imaging was carried out as described before.

Amine groups: A DNA oligo with an amine-group at the 3' end and an Atto488-label at the 5' end form compound #3 in Table 1, containing DNA having SEQ ID No. 3 was purchased from Biomers and corresponds to the second compound 34 mentioned above. It was mixed with complementary 3'-cholesterol-tagged DNA having SEQ ID No. 1 (corresponding to the first compound 16 mentioned above) at an equimolar concentration of 2 $\mu$M in the standard buffer (Buffer 1) and encapsulated in microfluidic droplets as described.

DNA nanostructures: To demonstrate the attachment of DNA nanostructures to the droplet periphery, we chose a hexagonal DNA lattice composed of 3 unique DNA sequences. [29] We modified one with a 3' cholesterol-tag to give compound #4ii having DNA with SEQ ID No. 5 (Compound #4ii, Table 1, corresponds to first compound 16 mentioned above), a second one with a 5' Atto488-tag having DNA with SEQ ID No. 4 (compound #4i, corresponds to second compound 34 mentioned above) and left a third one without modification having DNA with SEQ ID No. 6 (corresponds to a further second compound 34) (compound #4iii, #4i to #4iii all from Biomers) (see Figure 5). The three strands were mixed in Buffer 1 at a concentration of 2 $\mu$M and heated to 60 °C for 10 minutes using a thermocycler (BioRad) before microfluidic encapsulation.

Polystyrene beads: Plain polychromatic polystyrene microspheres with a diameter of 2 $\mu$m were purchased from Fluoresbrite TM , Polysciences, Inc. The beads were mixed with 4 $\mu$M of compound #7 and 2 $\mu$M of compound #8 and compound #9 (Table 1) at a concentration of approximately $10^6$ $\mu$l$^{-1}$ in Buffer 1 before droplet production. Filter-free devices were used to prevent the beads from blocking the channel.

Actin: Actin (Cytoskeleton, Inc.) was stored in a buffer containing 2 mM TRIS/HCl, pH 8, 0.2 mM $CaCl_2$ , 0.2 mM ATP, 0.005 % $NaN_3$ and 0.2 mM DTT, at -80 °C. The actin monomers were mixed with 10 mol% biotinylated-actin (cytoskeleton) and 1 mol% of Alexa488-labeled actin (LifeTechnologies). Before encapsulation, the monomers were polymerized into 5-10 $\mu$m sized filaments using an actin polymerization buffer (2.0 mM TRIS/HCl pH 8, 20 mM $MgCl_2$, 0.2 mM $CaCl_2$, 0.5 mM ATP, 0.005 % $NaN_3$ and 0.2 mM DTT) to give F-actin. After one hour of incubation (at room temperature), streptavidin (for biotin-binding) was added in 5-fold excess (10 $\mu$M) to the F-actin to enable the binding of biotinylated DNA (compound #6, Table 1). After incubation, the solution was centrifuged at $10^6$ g for 1h and the F-actin pellet was afterwards resuspended in HEPES pH 8.2 buffer to a final actin concentration of 80 $\mu$M. The complementary biotinylated and the cholesterol-tagged DNA were supplied via a second aqueous inlet in the microfluidic device at a concentration of 8 $\mu$M, yielding a one-to-one ratio of streptavidin primed biotinylated F-actin and DNA strands. To prevent blocking, encapsulation experiments were performed using filter-free microfluidic devices.

Jurkat cells: Jurkat, Clone E6-1(ATCC ® TIB-152 TM ) were cultured in RPMI-1640 (ThermoFisher Scientific) containing 10 % fetal bovine serum and 1 % penicillin-streptomycin in a humidified incubator at 37 °C and 5 % $CO_2$. The medium was changed every two days and cells were maintained at a cell density of $5 \times 10^5$ cells/ml. Prior to the experiment, cells were harvested, centrifuged and resuspended in culture media at a final concentration of $10^6$ cells/ml. 4 $\mu$M cholesterol-tagged DNA was added to the cell suspension before encapsulation. Because of typical cell sizes of 10-15 $\mu$m a filter-free device with 80 $\mu$m wide (instead of 30 $\mu$m) channels was used, resulting in droplets with a diameter of 80 $\mu$m.

Thermal Cycling Experiments

DNA containing compounds #10 and #11 were encapsulated in microfluidic droplets containing with Buffer 1. ROX was chosen as a fluorophore due to its known temperature stability. [41] Droplets were sealed in an observation chamber and imaged using a Leica SP5 microscope with a 60x oil immersion objective. The temperature was increased with a temperature-controlled microscope stage (Tokai Hit ThermoPlate TP-110) from 20 °C to 60 °C and subsequently decreased in steps of 10 °C, each lasting 3 minutes. This cycle was then repeated 2.5 times. The region of interest (ROI) was changed for every temperature step to avoid bleaching. Fluorescence intensities within 20 droplets were analyzed using ImageJ.

## Supporting Information

Interfacial tension measurements

A drop shape analyzer DSA25 (Krüss GmbH, Germany) tensiometer with CCD-camera and the pendant drop method was used to measure the surface tension at the interface of surfactants and aqueous phase in presence and absence of cholesterol-tagged DNA. The Laplace-Young equation was selected as a fitting-method. [45] Oil and aqueous phase densities were set to 1.6 gcm[-3] and 0.99 gcm[-3], respectively. For the measurements 1 mL of the aqueous phase (10 mM Tris-HCl, 1 mM EDTA, 5 mM MgCl$_2$, pH 8) was used in a plastic cuvette. To study to which extent cholesterol-tagged DNA alters the IFT, three solutions were investigated: one DNA-free, one with 2 $\mu$M 3' cholesterol-tagged DNA (SEQ ID No. 1) and one with 2 $\mu$M cholesterol-tagged and complementary DNA (SEQ ID No. 3) - all in the standard buffer (Buffer 1). The oil phase contained either commercial surfactant (2 wt% of Perflouro-polyether-polyethylene glycol (PFPE-PEG) block-copolymer fluorosurfactants from Ran Biotechnologies, Inc.) or custom-synthesized surfactant (2.5 mM of a triblock-copolymer PFPE-PEG-PFPE triblock-copolymer surfactant [1,2]) diluted in HFE-7500 (DuPont). Prior to the measurement, samples were drawn into 1 mL syringes equipped with a cannula (0.8 mm $\times$ 22 mm blunt/dull) and lowered into the aqueous phase. Drops were created using the software controlled dosing unit. Droplet interfacial tension (IFT [mN m[-1]]) was analyzed over time. Once the IFT did not show any change, the measurement was stopped and the IFT was collected. For each surfactant/buffer experiment, three measurements were performed and the mean value as well as the standard deviation were calculated. All results are presented in Table 2.

Table 2: Interfacial tension between aqueous and oil/surfactant phase for DNA-free aqueous solution (10 mM Tris-HCl, 1 mM EDTA, 5 mM MgCl$_2$, pH 8), or solutions where either 2 $\mu$M cholesterol-tagged DNA or 2 $\mu$M cholesterol-tagged DNA and 2 $\mu$M of its complementary strand have been added. The measurements have been carried out for both surfactants used in this study. The results indicate no dramatic change of the IFT between aqueous and oil phase. Nonetheless, a trend to lower tension can be deduced in the presence of cholesterol-tagged DNA.

| Surfactant | DNA-free [mN m[-1]] | Cholesterol-tagged DNA [mN m[-1]] | Cholesterol-tagged and complementary DNA [mN m[-1]] |
|---|---|---|---|
| Commercial | 3.89 $\pm$ 0.07 | 3.78 $\pm$ 0.12 | 3.21 $\pm$ 0.10 |
| Synthesized | 4.72 $\pm$ 0.06 | 3.16 $\pm$ 0.27 | 2.09 $\pm$ 0.53 |

FRAP analysis

For the FRAP analysis, normalized intensity values were calculated as follows:

$$I_{normalized} = \frac{I_{measured}}{I_{pre}}, \qquad (1)$$

$I_{pre}$ was calculated by taking the average of the five measured intensity values before bleaching. Due to the low number of acquired images, a correction for the bleaching of the dye during this pre-bleaching phase has not been taken into account. A non-linear least-square fit was applied to the normalized intensities from the recovery phase. The fit-function was of the form:

$$f(t) = A(1 - exp(-\lambda t)) + x_0, \qquad (2)$$

where $A$ and $\lambda$, are fit parameters and $x_0$ is the time point after bleaching i.e. the start of the recovery phase. With this, following the protocol of Axelrod [5] and Soumpasis, [6] the diffusion coefficient can be calculated via:

$$D = 0.32 \frac{r^2}{\tau_{1/2}} = -0.32 \frac{\lambda r^2}{0.5}, \qquad (3)$$

where $\tau$ is the half-recovery time and $r$ the radius of the circular bleaching spot (2.5 $\mu$m). In order to efficiently evaluate the measured data, a custom-written MATLAB script performing the above mentioned operations was used.

Correlation between diffusion coefficient and surfactant concentration

In order to study the behavior of cholesterol-tagged DNA within the surfactant layer, we performed FRAP measurements for a variety of surfactant concentrations.

The experiments were carried out with a commercial surfactant (008-FluoroSurfactant, RAN Biotechnologies). The results can be seen in Figure 9, which shows the diffusion coefficient as a function of surfactant concentration. The droplets were around 30 μm in diameter.

The diffusion coefficient decreases with an increasing surfactant concentration. A nonlinear-least square fit has been applied using the formula:

$$D(c) = A exp(-\lambda c), \qquad (4)$$

where A and λ are fitting coefficients and c the surfactant concentration. A possible interpretation of this result is that the packing of the surfactants at the droplet periphery changes with the surfactant concentration. An increasing concentration results in a denser packing at the droplet periphery and therefore a decreased diffusion coefficient of the cholesterol-tagged DNA. It also makes sense that the packing of surfactants at the periphery is limited. As the data indicate, the diffusion coefficient remains constant above a surfactant concentration of 2 wt%. This could be due to the saturation of densely packed surfactant at the droplet periphery. It is possible that the insertion of cholesterol-tagged DNA into the surfactant layer provides an experimental handle to determine the diffusive properties of surfactants.

## References

References to the following non-patent literature have been made above, indicated by corresponding superscripted numbers:

(1) Platzman, I.; Janiesch, J.-W.; Spatz, J. P. Journal of the American Chemical Society 2013, 135, 3339-3342.

(2) Janiesch, J.-W.; Weiss, M.; Kannenberg, G.; Hannabuss, J.; Surrey, T.; Platzman, I.; Spatz, J. P. Analytical Chemistry 2015, 87, 2063-2067.

(3) Kurokawa, C.; Fujiwara, K.; Morita, M.; Kawamata, I.; Kawagishi, Y.; Sakai, A.; Murayama, Y.; ichiro M. Nomura, S.; Murata, S.; Takinoue, M.; Yanagisawa, M. Proceedings of the National Academy of Sciences 2017, 114, 7228-7233.

(4) Weiss, M. et al. Nature Materials 2017, 17, 89-96.

(5) Axelrod, D.; Koppel, D.; Schlessinger, J.; Elson, E.; Webb, W. Biophysical Journal 1976, 16, 1055-1069.

(6) Soumpasis, D. Biophysical Journal 1983, 41, 95-97.

## Reference Signs

| | |
|---|---|
| 10 | microfluidic droplet |
| 12 | center |
| 14 | layer of surfactant |
| 16 | first compound |
| 18 | hydrophobic part |
| 20 | molecular recognition site |
| 22 | first fluid |
| 24 | second fluid |
| 28 | block-copolymer |
| 30 | hydrophilic block |
| 32 | hydrophobic blocks |
| 34 | second compound |
| 36 | molecular recognition site |
| 38 | functional moiety |
| 40 | interface |
| 42 | component A |
| 44 | component B |
| 46 | dispersion |

**EP 3 880 350 B1**

**Claims**

1. Surfactant-stabilized fluid interface,

   comprising a layer of surfactant and a first compound containing a hydrophobic part covalently linked to a molecular recognition site,
   wherein the surfactant-stabilized fluid interface has a first fluid on one side and a second fluid on the other side,
   wherein the surfactant stabilizes the fluid interface,
   wherein the hydrophobic part of the first compound is interacting with the layer of surfactant by secondary non-covalent interactions and the molecular recognition site of the first compound extends from the layer of surfactant,
   wherein the surfactant is a block-copolymer having at least one hydrophilic block and at least one hydrophobic block,
   wherein the first or second fluid contains a second compound comprising a further molecular recognition site which is capable of selectively binding to the molecular recognition site of the first compound, and
   wherein the molecular recognition site of the first compound is designed to form hydrogen bonds with the molecular recognition site of the second compound.

2. Surfactant-stabilized fluid interface according to claim 1,
   wherein the surfactant stabilized fluid interface encapsulates an emulsion droplet having a center comprising the first fluid.

3. Surfactant-stabilized fluid interface according to claim 2,
   wherein the emulsion droplet is a microfluidic droplet, having a maximum dimension of 0.5 $\mu$m to 1,000 $\mu$m.

4. Surfactant-stabilized fluid interface according to any one of the previous claims,
   wherein the first compound has a molecular recognition site which is hydrophilic.

5. Surfactant-stabilized fluid interface according to any one of the previous claims,
   wherein the molecular recognition site of the first compound is a polymer.

6. Surfactant-stabilized fluid interface according to any one of the previous claims,
   wherein the first compound consists of the hydrophobic part, the molecular recognition site and optionally a linker between the hydrophobic part and the molecular recognition site.

7. Surfactant-stabilized fluid interface according to any one of the previous claims,
   wherein the surfactant comprises a polyether glycol (PEG) and/or a polyetheramine block which has preferably a weight average molecular weight of 100 to 10,000 g/mol.

8. Surfactant-stabilized fluid interface according to any one of the previous claims,
   wherein the first or second fluid contains a second compound comprising a further molecular recognition site which is capable of selectively binding to the molecular recognition site of the first compound and optionally carries a covalently bound functional moiety.

9. Surfactant-stabilized fluid interface according to claim 8,
   wherein the second compound is contained in that of the first and second fluid into which the molecular recognition site of the first compound extends from the layer of surfactant.

10. Surfactant-stabilized fluid interface according to any one of the previous claims,
    wherein the molecular recognition site of the first compound comprises 4 or more nucleobases, in particular 7 or more nucleobases.

11. Surfactant-stabilized fluid interface according to claim 2,
    wherein the molecular recognition site of the first compound extends from the layer of surfactant into the first fluid.

12. Surfactant-stabilized fluid interface according to any one of claims 8 to 16, wherein the molecular recognition site of the second compound is bound to a functional moiety having a functional group.

13. Surfactant-stabilized fluid interface according to any one of claims 8 to 17, wherein the functional moiety bound to

19

the second compound comprises one of reactive groups, such as amine-groups, carboxylic groups, thiol groups and the like, or a DNA nanostructures, or microspheres, or nanopartides, or proteins, or actin filaments or living cells.

14. Dispersion comprising one or more droplets having a surfactant stabilized fluid interface according to any one of the previous claims, wherein the surfactant stabilized fluid interface encapsulates the one or more droplets, wherein the droplets comprise the first fluid and wherein the second fluid is the continuous phase of the dispersion.

15. Separating process using a surfactant-stabilized fluid interface according to any of claims 1 to 13 for separating a component A from a first fluid, wherein the method comprises the following steps:

providing the first fluid in which the component A and a first compound are dissolved or dispersed, wherein the first compound comprises a hydrophobic part and a molecular recognition site, wherein the hydrophobic part is covalently linked to the molecular recognition site, and wherein the molecular recognition site is capable of binding component A;

providing a second fluid in which a surfactant which is a block-copolymer having at least one hydrophilic block and at least one hydrophobic block is dissolved; and

bringing the first and second fluid into contact with each other;

wherein the second fluid is immiscible with the first fluid such that a phase separation between the first and second fluid occurs and an interface between the first and second fluid is formed when the first and second fluid contact each other, and wherein the interface between the first and second fluid is a surfactant-stabilized fluid interface according to any one of claims 1 to 13.

**Patentansprüche**

1. Tensid-stabilisierte Fluid-Grenzfläche,

umfassend eine Tensidschicht und eine erste Verbindung, die einen hydrophoben Teil enthält, der kovalent mit einer molekularen Erkennungsstelle verknüpft ist,

wobei die Tensid-stabilisierte Fluid-Grenzfläche ein erstes Fluid auf einer Seite und ein zweites Fluid auf der anderen Seite aufweist,

wobei das Tensid die Fluid-Grenzfläche stabilisiert,

wobei der hydrophobe Teil der ersten Verbindung durch sekundäre nichtkovalente Wechselwirkungen mit der Tensidschicht wechselwirkt, und die molekulare Erkennungsstelle der ersten Verbindung sich von der Tensidschicht erstreckt,

wobei das Tensid ein Block-Copolymer ist, welches mindestens einen hydrophilen Block und mindestens einen hydrophoben Block aufweist, wobei das erste oder zweite Fluid eine zweite Verbindung enthält, die eine weitere molekulare Erkennungsstelle umfasst, welche fähig ist, selektiv an die molekulare Erkennungsstelle der ersten Verbindung zu binden, und wobei die molekulare Erkennungsstelle der ersten Verbindung dazu ausgebildet ist, Wasserstoffbrückenbindungen mit der molekularen Erkennungsstelle der zweiten Verbindung zu bilden.

2. Tensid-stabilisierte Fluid-Grenzfläche nach Anspruch 1,
wobei die Tensid-stabilisierte Fluid-Grenzfläche ein Emulsionströpfchen ummantelt, das ein Zentrum aufweist, welches das erste Fluid umfasst.

3. Tensid-stabilisierte Fluid-Grenzfläche nach Anspruch 2,
wobei das Emulsionströpfchen ein mikrofluidisches Tröpfchen ist, das eine maximale Ausdehnung von 0,5 $\mu$m bis 1000 $\mu$m aufweist.

4. Tensid-stabilisierte Fluid-Grenzfläche nach einem der vorstehenden Ansprüche,
wobei die erste Verbindung eine molekulare Erkennungsstelle aufweist, die hydrophil ist.

5. Tensid-stabilisierte Fluid-Grenzfläche nach einem der vorstehenden Ansprüche,
wobei die molekulare Erkennungsstelle der ersten Verbindung ein Polymer ist.

6. Tensid-stabilisierte Fluid-Grenzfläche nach einem der vorstehenden Ansprüche,
wobei die erste Verbindung aus dem hydrophoben Teil, der molekularen Erkennungsstelle und optional einem Linker zwischen dem hydrophoben Teil und der molekularen Erkennungsstelle besteht.

7. Tensid-stabilisierte Fluid-Grenzfläche nach einem der vorstehenden Ansprüche, wobei das Tensid einen Polyetherglykol- (PEG) und/oder einen Polyetheramin-Block umfasst, der bevorzugt ein gewichtsmittleres Molekulargewicht von 100 bis 10.000 g/mol aufweist.

8. Tensid-stabilisierte Fluid-Grenzfläche nach einem der vorstehenden Ansprüche, wobei das erste oder zweite Fluid eine zweite Verbindung enthält, die eine weitere molekulare Erkennungsstelle umfasst, welche fähig ist, selektiv an die molekulare Erkennungsstelle der ersten Verbindung zu binden, und optional eine kovalent gebundene funktionelle Einheit trägt.

9. Tensid-stabilisierte Fluid-Grenzfläche nach Anspruch 8, wobei die zweite Verbindung in demjenigen von dem ersten und zweiten Fluid enthalten ist, in das sich die molekulare Erkennungsstelle der ersten Verbindung von der Tensidschicht erstreckt.

10. Tensid-stabilisierte Fluid-Grenzfläche nach einem der vorstehenden Ansprüche, wobei die molekulare Erkennungsstelle der ersten Verbindung 4 oder mehr Nukleobasen umfasst, insbesondere 7 oder mehr Nukleobasen.

11. Tensid-stabilisierte Fluid-Grenzfläche nach Anspruch 2, wobei die molekulare Erkennungsstelle der ersten Verbindung sich von der Tensidschicht in das erste Fluid erstreckt.

12. Tensid-stabilisierte Fluid-Grenzfläche nach einem der Ansprüche 8 bis 16, wobei die molekulare Erkennungsstelle der zweiten Verbindung an eine funktionelle Einheit gebunden ist, die eine funktionelle Gruppe aufweist.

13. Tensid-stabilisierte Fluid-Grenzfläche nach einem der Ansprüche 8 bis 17, wobei die funktionelle Einheit, die an die zweite Verbindung gebunden ist, eines von reaktiven Gruppen, wie Amingruppen, Carboxylgruppen, Thiolgruppen und dergleichen, oder einer DNA-Nanostruktur oder Mikrokugeln oder Nanopartikeln oder Proteinen oder Aktinfilamenten oder lebenden Zellen umfasst.

14. Dispersion, umfassend eines oder mehrere Tröpfchen mit einer Tensidstabilisierten Fluid-Grenzfläche nach einem der vorstehenden Ansprüche, wobei die Tensid-stabilisierte Fluid-Grenzfläche das eine oder die mehreren Tröpfchen ummantelt, wobei die Tröpfchen das erste Fluid umfassen und wobei das zweite Fluid die kontinuierliche Phase der Dispersion ist.

15. Trennverfahren unter Verwendung einer Tensid-stabilisierten Fluid-Grenzfläche nach einem der Ansprüche 1 bis 13 zum Trennen eines Bestandteils A von einem ersten Fluid, wobei das Verfahren die folgenden Schritte umfasst:

Bereitstellen des ersten Fluids, in dem der Bestandteil A und eine erste Verbindung gelöst oder dispergiert sind, wobei die erste Verbindung einen hydrophoben Teil und eine molekulare Erkennungsstelle umfasst, wobei der hydrophobe Teil kovalent mit der molekularen Erkennungsstelle verknüpft ist, und wobei die molekulare Erkennungsstelle fähig ist, Bestandteil A zu binden; Bereitstellen eines zweiten Fluids, in welchem ein Tensid gelöst ist, das ein Block-Copolymer ist, welches mindestens einen hydrophilen Block und mindestens einen hydrophoben Block aufweist; und miteinander in Kontakt Bringen des ersten und zweiten Fluids;

wobei das zweite Fluid mit dem ersten Fluid nicht mischbar ist, so dass eine Phasentrennung zwischen dem ersten und zweiten Fluid eintritt und eine Grenzfläche zwischen dem ersten und zweiten Fluid gebildet wird, wenn das erste und zweite Fluid miteinander in Kontakt kommen, und wobei die Grenzfläche zwischen dem ersten und zweiten Fluid eine Tensidstabilisierte Fluid-Grenzfläche nach einem der Ansprüche 1 bis 13 ist.

**Revendications**

1. Interface fluide stabilisée par un tensioactif,

comprenant une couche de tensioactif et un premier composé contenant une partie hydrophobe liée de manière covalente à un site de reconnaissance moléculaire, l'interface fluide stabilisée par un tensioactif ayant un premier fluide d'un côté et un second fluide de l'autre côté,

dans laquelle le tensioactif stabilise l'interface du fluide,

dans laquelle la partie hydrophobe du premier composé interagit avec la couche de tensioactif par des interactions non covalentes secondaires et le site de reconnaissance moléculaire du premier composé s'étend à partir de la couche de tensioactif,

dans laquelle le tensioactif est un copolymère séquencé ayant au moins une séquence hydrophile et une séquence hydrophobe,

dans laquelle le premier ou le second fluide contient un second composé comprenant un autre site de reconnaissance moléculaire qui est capable de se lier sélectivement au site de reconnaissance moléculaire du premier composé, et

dans laquelle le site de reconnaissance moléculaire du premier composé est prévu pour former liaisons hydrogènes avec le site de reconnaissance moléculaire du second composé.

2. Interface fluide stabilisée par un tensioactif selon la revendication 1, l'interface fluide stabilisée par le tensioactif encapsulant une gouttelette d'émulsion ayant un centre comprenant le premier fluide.

3. Interface fluide stabilisée par un tensioactif selon la revendication 2,
dans laquelle la gouttelette d'émulsion est une gouttelette microfluidique ayant une dimension maximale de 0,5 $\mu$m à 1 000 $\mu$m.

4. Interface fluide stabilisée par un tensioactif selon l'une quelconque des revendications précédentes,
dans laquelle le premier composé a un site de reconnaissance moléculaire qui est hydrophile.

5. Interface fluide stabilisée par un tensioactif selon l'une quelconque des revendications précédentes,
dans laquelle le site de reconnaissance moléculaire du premier composé est un polymère.

6. Interface fluide stabilisée par un tensioactif selon l'une quelconque des revendications précédentes,
dans laquelle le premier composé est constitué de la partie hydrophobe, du site de reconnaissance moléculaire et d'éventuellement un liant entre la partie hydrophobe et le site de reconnaissance moléculaire.

7. Interface fluide stabilisée par un tensioactif selon l'une quelconque des revendications précédentes,
dans laquelle le tensioactif comprend un polyéther glycol (PEG) et une séquence polyéther amine qui a de préférence un poids moléculaire moyen en poids de 100 à 10 000 g/mol.

8. Interface fluide stabilisée par un tensioactif selon l'une quelconque des revendications précédentes,
dans laquelle le premier ou le second fluide contient un second composé comprenant un autre site de reconnaissance moléculaire qui est capable de se lier sélectivement au site de reconnaissance moléculaire du premier composé et porte éventuellement une fraction fonctionnelle liée de manière covalente.

9. Interface fluide stabilisée par un tensioactif selon la revendication 8, dans laquelle le second composé est contenu dans celui parmi les premier et second fluides dans lequel le site de reconnaissance moléculaire du premier composé s'étend à partir de la couche de tensioactif.

10. Interface fluide stabilisée par un tensioactif selon l'une quelconque des revendications précédentes,
dans laquelle le site de reconnaissance moléculaire du premier composé comprend 4 ou plus de nucléobases, en particulier 7 ou plus de nucléobases.

11. Interface fluide stabilisée par un tensioactif selon la revendication 2, dans laquelle le site de reconnaissance moléculaire du premier composé s'étend à partir de la couche de tensioactif dans le premier fluide.

12. Interface fluide stabilisée par un tensioactif selon l'une quelconque des revendications 8 à 16, dans laquelle le site de reconnaissance moléculaire du second composé est lié à une fraction fonctionnelle ayant un groupement fonctionnel.

13. Interface fluide stabilisée par un tensioactif selon l'une quelconque des revendications 8 à 17, dans laquelle la fraction fonctionnelle liée au second composé comprend un des groupements réactifs tels que des groupements amine, des groupements carboxyliques, des groupements thiol et similaires, ou des nanostructures d'ADN, ou des microsphères, ou des nanoparticules, ou des protéines, ou des filaments d'actine ou des cellules vivantes.

14. Dispersion comprenant une ou plusieurs gouttelettes ayant une interface de fluide stabilisée par un tensioactif selon l'une quelconque des revendications précédentes, dans laquelle l'interface du fluide stabilisée par le tensioactif encapsule la ou les gouttelettes,
dans laquelle les gouttelettes comprennent le premier fluide et dans laquelle le second fluide est la phase continue de la dispersion.

15. Procédé de séparation utilisant une interface fluide stabilisée par un tensioactif selon l'une quelconque des revendications 1 à 13 pour séparer un composant A d'un premier fluide,
le procédé comprenant les étapes suivantes :

la fourniture du premier fluide dans lequel le composant A et un premier composé sont dissouts ou dispersés, le premier composé comprenant une partie hydrophobe et un site de reconnaissance moléculaire, la partie hydrophobe étant liée de manière covalente au site de reconnaissance moléculaire, et le site de reconnaissance moléculaire étant capable de se lier au composant A ;
la fourniture d'un second fluide dans lequel un tensioactif qui est un copolymère séquencé ayant au moins une séquence hydrophile et au moins une séquence hydrophobe est dissout ; et
la mise en contact des premier et second fluides l'un avec l'autre ;
dans lequel le second fluide est immiscible avec le premier fluide de sorte qu'une séparation de phases se produit entre le premier et le second fluide et une interface entre le premier et le second fluide est formée lorsque les premier et second fluides sont en contact l'un avec l'autre, et dans lequel l'interface entre le premier et le second fluide est une interface fluide stabilisée par un tensioactif selon l'une quelconque des revendications 1 à 13.

Fig. 1

**Fig. 2**

**Fig. 3**

**Fig. 4**

**Fig. 5**

**Fig. 6**

**Fig. 7**

**Fig. 8**

Fig. 9

Fig. 10

**Fig. 11**

**Fig. 12**

Fig. 13

Fig. 14

**Fig. 15**

**Fig. 16**

**Fig. 17**

**Fig. 18**

# EP 3 880 350 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ILIA PLATZMAN et al.** Synthesis of Nanostructured and Biofunctionalized Water-in-Oil Droplets as Tools for Homing T Cells. *J. Am. Chem. Soc.,* 2013, vol. 135, 3339-3342
- **PLATZMAN, I.; ; JANIESCH, J.-W.; ; SPATZ, J. P.** *Journal of the American Chemical Society,* 2013, vol. 135, 3339-3342
- **JANIESCH, J.-W.; ; WEISS, M.; ; KANNENBERG, G.; ; HANNABUSS, J.; ; SURREY, T.; ; PLATZMAN, I.; ; SPATZ, J. P.** *Analytical Chemistry,* 2015, vol. 87, 2063-2067
- **KUROKAWA, C.; ; FUJIWARA, K.; ; MORITA, M.; ; KAWAMATA, I.; ; KAWAGISHI, Y.; ; SAKAI, A.; ; MURAYAMA, Y.; ; ICHIRO M. ; NOMURA, S.; ; MURATA, S.;.** *Proceedings of the National Academy of Sciences,* 2017, vol. 114, 7228-7233
- **WEISS, M. et al.** *Nature Materials,* 2017, vol. 17, 89-96
- **AXELROD, D.; ; KOPPEL, D.; ; SCHLESSINGER, J.; ; ELSON, E.; ; WEBB, W.** *Biophysical Journal,* 1976, vol. 16, 1055-1069
- **SOUMPASIS, D.** *Biophysical Journal,* 1983, vol. 41, 95-97